# EUROPEAN PATENT SPECIFICATION

(11) **EP 4 490 931 B1**
(45) Date of publication and mention of the grant of the patent: **26.08.2026**
(21) Application number: 22713915.1
(22) Date of filing: 10.03.2022
(51) Int. Cl.: H04W 12/06, H04W 4/70, H04W 12/72, H04L 67/04, H04L 67/00, H04W 8/20, H04L 9/40

(54) **SUBSCRIPTION PROFILE DOWNLOAD AND INSTALLATION**
HERUNTERLADEN UND INSTALLATION EINES ABONNEMENTPROFILS
TÉLÉCHARGEMENT ET INSTALLATION DE PROFIL D'ABONNEMENT

(43) Date of publication of application: 15.01.2025
(73) Proprietor: Telefonaktiebolaget LM Ericsson (publ), 164 83 Stockholm (SE)
(72) Inventor: STÅHL, Per, 218 51 Klagshamn (SE); SÄÄSKILAHTI, Juha, 02230 Espoo (FI)
(74) Representative: Ericsson
(86) International application number: PCT/EP2022/056206
(87) International publication number: WO 2023/169683

(56) References cited:
- US-A1- 2020 404 501
- US-A1- 2021 385 635
- US-A1- 2022 070 655

## Description

### TECHNICAL FIELD

Embodiments presented herein relate to a method, a subscriber module, a computer program, and a computer program product for subscription profile download and installation. Further embodiments presented herein relate to methods, a managing entity, a Subscription Manager Discovery Server entity, computer programs, and a computer program product for enabling subscription profile download and installation to the subscriber module.

### BACKGROUND

The Global System for Mobile communication Alliance (GSMA) has specified how to provide subscribers with third generation partnership project (3GPP) subscription profiles, often denoted Subscriber Identity Module (SIM) profiles, hereinafter denoted subscription profiles. Such subscription profiles can be remotely downloaded over the Internet to the physical hardware in the communication device known as embedded Universal Integrated Circuit Card (eUICC) or integrated Universal Integrated Circuit Card (iUICC) or integrated embedded Universal Integrated Circuit Card (ieUICC). A remote SIM provisioning protocol (RSP) is followed to remotely deliver subscription profiles from a provisioning server (such as an enhanced Subscription Manager Data Preparation (SM-DP+) server; hereinafter denoted SM-DP+ entity for short) to the communication device. Remote SIM provisioning for consumer devices is described in the documents "SGP.21 - RSP Architecture Specification v2.4" and "SGP.22 - RSP Technical Specification v2.4".

A communication device downloads the subscription profile from the SM-DP+ entity. When a mobile network operator (MNO) orders a subscription profile from the SM-DP+ entity, the SM-DP+ entity will prepare a subscription profile that will be available for download for the communication device. During the profile ordering phase the MNO also performs necessary network provisioning actions.

So called Internet-of-Things (IoT) devices are examples of low-powered communication devices. Provisioning techniques for IoT devices that are based on the remote SIM provisioning for consumer devices are considered by the industry. According to the consumer variant, user consent is required for subscription profile download and subscription profile management operations. Since an IoT device is typically without user interface, IoT devices might not be able to establish user consent for operations pertaining to subscription profiles. In the considered provisioning techniques for IoT devices, the IoT device is configured to accept profile download triggering operations and profile management operations (such as enable, disable, and delete of subscription profiles) sent to the IoT device over an established secure communication channel from an authorized (remote) server, hereinafter denoted a managing entity, without seeking any user confirmation via some local or remote user interface. This allows automated subscription profile handling of a batch, say hundreds or thousands, of IoT devices. The managing entity might be referred to as an eSIM IoT remote Manager (eIM). The managing entity might, in addition to profile management, also handle device and data management. For example, the functionality of the managing entity can be implemented in a device management server of an enterprise configured to handle management for a large batch of communication devices or be implemented as an application on an end-user device used to manage a IoT devices. We refer to the adapted consumer variant for IoT devices leveraging the managing entity as the IoT eSIM variant.

There are currently three options, below denoted option 1, option 2, and option 3, defined to provide information to the communication device (and subscriber module, eUICC, iUICC or ieiUICC) that a subscription profile is pending for download. All three options apply for the consumer eSIM variant and the IoT eSIM variant.

Option 1: At the subscription profile ordering phase, either the MNO receives (over ES2+) an Activation Code (AC) from the SM-DP+ entity, or the MNO generates an AC from data received from the SM-DP+. The MNO then hands out the AC to the customer (possibly via a Communications Service Provider (CSP)), that in case of the IoT eSIM variant provides the AC to the managing entity. Depending on which eSIM variant is used , the customer or managing entity triggers download of the subscription profile by providing the AC to the communication device that then, based on information from the AC, is enabled to connect to the proper SM-DP+ entity to download the subscription profile.

Option 2: The communication device is configured with, or at least has access to, a default SM-DP+ address that defines the SM-DP+ entity to use for download of the subscription profile. For example, at first power-up during commissioning of the communication device, or based some other defined trigger, the communication device connects to the default SM-DP+ entity to download the subscription profile.

Option 3: At the subscription profile ordering phase, the MNO requests the SM-DP+ entity to register information about an available subscription profile for a particular communication device at a discovery service (such as a Subscription Manager Discovery Server (SM-DS) entity). An event is then created at the SM-DS entity for the particular communication device, instructing the communication device to connect to the SM-DP+ entity to download the subscription profile. The communication device is configured to contact the SM-DS, for example, at first power-up during commissioning of the communication device, to check for pending subscription profile download events. Upon successful download of the event from the SM-DS entity, the communication device connects to the SM-DP+ entity given by the event to download the subscription profile. GSMA has currently specified a root SM-DS, which is common for all communication devices. There may, however, be subsidiary SM-DS servers, and vendor specific discovery services, and thus diverse SM-DS servers.

According to option 2 and option 3 the MNO provides the e/i/ieUICC (hereafter simply eUICC) identifier (EID) of the communication device and the prepared profile package for download is bound to the EID in the SM-DP+ entity. According to option 1 there is no need for the MNO (or SM-DP+ entity) to know the EID at the time of subscription profile ordering. In option 1, the communication device receives, via the AC, a Matching ID (MID) that the communication device presents to the SM-DP+ entity during download of the subscription profile to identify the correct prepared profile package.

For secure management of IoT devices, secure communication should be established between the IoT device and the managing entity. Such secure communication relies on key material being available at the IoT device and at the managing entity. For example, a pre-shared key or private-public key pairs and certificates might be used by the IoT device and the managing entity. The secure communication channel between the communication device and the device management server acting as managing entity may be leveraged for securing the triggering of subscription profile download and profile management operations.

Memory and/or power constrained IoT devices and IoT devices connecting over Low Power Wide Area (LPWA) networks typically cannot support Hypertext Transfer Protocol Secure (HTTPS) communication with the SM-DP+ as required by the aforementioned specification "SGP.22 - RSP Technical Specification". In some examples, the subscription profile download (and notification handling) for these IoT devices is performed via the managing entity to the SM-DP+, leveraging the secure communication between the IoT device and the managing entity. Further, the managing entity handles the HTTPS communication with the SM-DP+ entity. For IoT devices, the same is true (i.e. communication is via the managing entity that handles HTTPS) also when an IoT device is interacting with the SM-DS entity. Less constrained IoT devices that, for example, only lacks (or have a very limited) user interface, are typically capable of communicating directly with an SM-DP+ entity or SM-DS entity through the use of HTTPS according to the aforementioned specification "SGP.22 - RSP Technical Specification".

An extra layer of protection might be added between the managing entity and the subscriber module, in addition to the secure channel between the communication device and the managing entity. This is in order to protect against potential malwares residing in the communication devices. IoT device security is central and critical to protect against malwares residing in IoT devices. The extra layer of protection described here can be seen as a complement to the device security implementation in case there are flaws. The managing entity might therefore need to sign, using its private key, all commands, or operations, that are sent to the to the subscriber module and that relates to profile state management operations. Further, the subscriber module might need to verify the signature, using the managing entity public key that has been securely configured in the subscriber module, before accepting operations such as subscription profile enable, subscription profile disable, and subscription profile delete. Such operations might be referred to as profile state management operations (PSMOs). This is to ensure that malware cannot (download, install, and) enable a rogue subscription profile into the subscriber module or that the malware cannot disable or delete already installed subscription profiles, resulting in loss of connectivity and need for re-installation of subscription profiles. The signed PSMOs protects the management operation, data that uniquely identifies the profile (e.g., Integrated Circuit Card ID; ICCID), and data (e.g., counter or random) for replay protection.

Protecting only the enabling of the subscription profile through a signed PSMO from the managing entity may not protect against malware in the communication device downloading, installing, and enabling a rogue subscription profile. The malware may trigger/observe the download of an authorized subscription profile in order to extract from subscription profile metadata the ICCID that uniquely identifies the authorized subscription profile. The malware may then block and reject the installation of the authorized subscription profile and instead communicate the ICCID to a rogue SM-DP+ entity that prepares a rogue subscription profile using the obtained ICCID as subscription profile identifier. The malware may then trigger download of the rogue subscription profile from the rogue SM-DP+ entity. Assuming the rogue SM-DP+ entity has valid certificates (e.g., GSMA issued certificates), the subscription profile will be accepted and installed by the subscriber module. The subscriber module provides a signed result indicating successful installation of the subscription profile identified by ICCID. This signed result may then be forwarded by the malware to the managing entity that, upon successful verification of the signed result and successful comparison of the received ICCID to stored ICCID of the authorized subscription profile in the managing entity, may then send a signed PSMO to enable the subscription profile identified by the ICCID. This then enables the rogue subscription profile in the subscriber module.

By not protecting the download and installation such that malware is free to trigger download and installation of any subscription profile from any SM-DP+ entity also allows malware to fill the memory of the subscriber module and thereby prevent download of authorized subscription profiles due to lack of available memory in the subscriber module.

Another issue related to the subscription profile download is that to which entity to connect for download of a subscription profile, i.e., the SM-DP+ address, is handled by the communication device and, in case of malware, the malware can trigger the communication device to connect to a rogue SM-DP+ entity. For example, even if the subscriber module would provide the default SM-DP+ address to an IoT Profile Assistant (IPA) provided in the communication device, the malware can still cause the communication device to connect to a completely different address at which a rogue SM-DP+ entity is located. This rogue SM-DP+ entity may then, similar to how the ICCID can be faked in the subscription profile, also fake the server address in the serverSigned1 structure to prevent the subscriber module from discovering that a rogue SM-DP+ entity is used.

In view of the above, there is a need for secure, yet computationally efficient, procedures for subscription profile download to a communication device.

US 2021/385635 A1 discloses handling of subscription profiles for a set of wireless devices.

US 2022/070655 A1 discloses a method and an apparatus for recovering a profile in the case of a profile movement failure when the profile is moved between security modules included in two electronic devices.

US 2020/404501 A1 discloses a method and apparatus for selecting an embedded Universal Integrated Circuit Card (eUICC), and more particularly, to a method and apparatus for installing and managing an eSIM profile.

### SUMMARY

An object of embodiments herein is to provide secure, yet computationally efficient, procedures for subscription profile download to a communication device.

According to a first aspect there is presented a method for subscription profile download and installation. The method is performed by a subscriber module. The method comprises obtaining download and installation data (DID), for the subscription profile. The DID identifies an OID of an SM-DP+ entity and/or an SM-DS entity, for the subscriber module to use when downloading and installing the subscription profile. The method comprises validating the DID to ensure the DID is acceptable by the subscriber module for use in the subscription profile download and installation. The method comprises downloading the subscription profile from an SM-DP+ entity. The SM-DP+ entity from which the subscription profile is to be downloaded from is either given by the OID identified by the DID when the OID is of the SM-DP+ entity, or is given by an event record received by the subscriber module from the SM-DS entity when the OID identified by the DID is of the SM-DS entity and wherein the SM-DS entity is given by the OID identified by the DID. The method comprises installing the subscription profile in the subscriber module.

According to a second aspect there is presented a subscriber module for subscription profile download and installation. The subscriber module comprises processing circuitry. The processing circuitry is configured to cause the subscriber module to obtain DID, for the subscription profile. The DID identifies an OID of an SM-DP+ entity and/or an SM-DS entity, for the subscriber module to use when downloading and installing the subscription profile. The processing circuitry is configured to cause the subscriber module to validate the DID to ensure the DID is acceptable by the subscriber module for use in the subscription profile download and installation. The processing circuitry is configured to cause the subscriber module to download the subscription profile from an SM-DP+ entity. The SM-DP+ entity from which the subscription profile is to be downloaded from is either given by the OID identified by the DID when the OID is of the SM-DP+ entity, or is given by an event record received by the subscriber module from the SM-DS entity when the OID identified by the DID is of the SM-DS entity and wherein the SM-DS entity is given by the OID identified by the DID. The processing circuitry is configured to cause the subscriber module to install the subscription profile in the subscriber module.

According to a third aspect there is presented a computer program for subscription profile download and installation, the computer program comprising computer program code which, when run on processing circuitry of a subscriber module, causes the subscriber module to perform a method according to the first aspect.

According to a fourth aspect there is presented a method for enabling subscription profile download and installation to a subscriber module. The method is performed by a managing entity. The method comprises obtaining a trigger for the subscription profile to be downloaded to the subscriber module. The method comprises providing, towards the subscriber module, DID, for the subscription profile. The DID identifies an OID of an SM-DP+ entity and/or an SM-DS entity, for the subscriber module to use when downloading and installing the subscription profile. The method comprises receiving, from the subscriber module, information that the subscription profile has been downloaded to the subscriber module. The information comprises an ICCID of the subscription profile.

According to a fifth aspect there is presented a managing entity for enabling subscription profile download and installation to a subscriber module. The managing entity comprises processing circuitry. The processing circuitry is configured to cause the managing entity to obtain a trigger for the subscription profile to be downloaded to the subscriber module. The processing circuitry is configured to cause the managing entity to provide, towards the subscriber module, DID, for the subscription profile. The DID identifies an OID of an SM-DP+ entity and/or an SM-DS entity, for the subscriber module to use when downloading and installing the subscription profile. The processing circuitry is configured to cause the managing entity to receive, from the subscriber module, information that the subscription profile has been downloaded to the subscriber module. The information comprises an ICCID of the subscription profile.

According to a sixth aspect there is presented a computer program for enabling subscription profile download and installation to a subscriber module, the computer program comprising computer program code which, when run on processing circuitry of a managing entity, causes the managing entity to perform a method according to the fourth aspect.

According to a seventh aspect there is presented a method for enabling subscription profile download and installation to a subscriber module. The method is performed by an SM-DS entity. The method comprises performing mutual authentication with the subscriber module. The method comprises sending, towards the subscriber module, an event record. The event record is signed by the SM-DS entity and comprises an OID of an SM-DP+ entity for the subscriber module to use when downloading and installing the subscription profile.

According to an eighth aspect there is presented an SM-DS entity for enabling subscription profile download and installation to a subscriber module. The SM-DS entity comprises processing circuitry. The processing circuitry is configured to cause the SM-DS entity to perform mutual authentication with the subscriber module. The processing circuitry is configured to cause the SM-DS entity to send, towards the subscriber module, an event record. The event record is signed by the SM-DS entity and comprises an OID of an SM-DP+ entity for the subscriber module to use when downloading and installing the subscription profile.

According to a tenth aspect there is presented a computer program for enabling subscription profile download and installation to a subscriber module, the computer program comprising computer program code which, when run on processing circuitry of an SM-DS entity, causes the SM-DS entity to perform a method according to the seventh aspect.

According to an eleventh aspect there is presented a computer program product comprising a computer program according to at least one of the third aspect, the sixth aspect, and the tenth aspect and a computer readable storage medium on which the computer program is stored. The computer readable storage medium can be a non-transitory computer readable storage medium.

Advantageously, these aspects provide a secure procedure for subscription profile download to, and installation in, a communication device, where the above issues are avoided

Advantageously, these aspects prevent rogue subscription profiles from being downloaded to, and installed in, a subscriber module of a communication device.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, action, etc." are to be interpreted openly as referring to at least one instance of the element, apparatus, component, means, module, action, etc., unless explicitly stated otherwise. The actions of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a communication system according to embodiments;
Figs. 2, 3, and 4 are flowcharts of methods according to embodiments;
Fig. 5 is a signalling diagram according to embodiments;
Fig. 6 is a schematic diagram showing functional units of a subscriber module according to an embodiment;
Fig. 7 is a schematic diagram showing functional modules of a subscriber module according to an embodiment;
Fig. 8 is a schematic diagram showing functional units of a managing entity according to an embodiment;
Fig. 9 is a schematic diagram showing functional modules of a managing entity according to an embodiment;
Fig. 10 is a schematic diagram showing functional units of an SM-DS entity according to an embodiment;
Fig. 11 is a schematic diagram showing functional modules of an SM-DS entity according to an embodiment; and
Fig. 12 shows one example of a computer program product comprising computer readable means according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any action or feature illustrated by dashed lines should be regarded as optional.

The wording that a certain data item or piece of information is obtained by a first device should be construed as that data item or piece of information being retrieved, fetched, received, or otherwise made available to the first device. For example, the data item or piece of information might either be pushed to the first device from a second device or pulled by the first device from a second device. Further, in order for the first device to obtain the data item or piece of information, the first device might be configured to perform a series of operations, possible including interaction with the second device. Such operations, or interactions, might involve a message exchange comprising any of a request message for the data item or piece of information, a response message comprising the data item or piece of information, and an acknowledge message of the data item or piece of information. The request message might be omitted if the data item or piece of information is neither explicitly nor implicitly requested by the first device.

The wording that a certain data item or piece of information is provided by a first device to a second device should be construed as that data item or piece of information being sent or otherwise made available to the second device by the first device. For example, the data item or piece of information might either be pushed to the second device from the first device or pulled by the second device from the second device. Further, in order for the first device to provide the data item or piece of information to the second device, the first device and the second device might be configured to perform a series of operations in order to interact with each other. Such operations, or interaction, might involve a message exchange comprising any of a request message for the data item or piece of information, a response message comprising the data item or piece of information, and an acknowledge message of the data item or piece of information. The request message might be omitted if the data item or piece of information is neither explicitly nor implicitly requested by the second device.

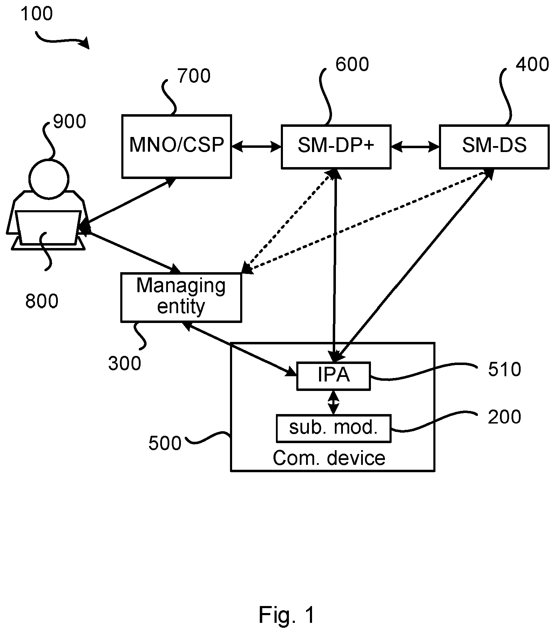

Fig. 1 is a schematic diagram illustrating a communication system 100 where embodiments presented herein can be applied. The communication system 100 comprises a communication device 500, an MNO/CSP entity 700, an SM-DP+ entity 600, an SM-DS entity 400, a managing entity 300, and an end-user device 800 for allowing a device-owner or end-user 900 to interact with e.g., the MNO/CSP entity 700 and the managing entity 300. The end-user device 800 might be user equipment, laptop computer, tablet computer, smartphone, or the like.

The communication device 500 is the device to which a subscription profile is to be downloaded. The communication device 500 comprises a subscriber module (sub. mod.) 200, such as an iUICC or eUICC or ieUICC, supporting remote provisioning of subscription profiles according to the GSMA consumer variant. The subscriber module holds credentials for secure interaction with both provisioning servers (such as the SM-DP+ entity 600), and discovery servers (such as an SM-DS entity 400). The communication device 500 might be an IoT device. In such cases the communication device 500 might be managed by the managing entity 300 that, for example, can be a device management server of an enterprise configured to handle management for a large batch of IoT devices or an application on an end-user device, such as a user equipment, used to manage a few IoT devices. The managing entity 300 might also handle subscription profile download triggering (by providing an AC as in option 1) and profiles management operations such as enablement, disablement, and deletion of subscription profiles.

The communication device 500 comprises am IoT Profile Assistant (IPA) 510 that is configured to assist during download of subscription profiles and profile management operations. The IPA 510 interacts with the subscriber module 200. The IPA 510 also interacts with the SM-DP+ entity 600 for subscription profile download and notification handling and with the managing entity 300 for profile management operations. The IPA 510 may be configured to interact with the SM-DS entity 400 to check for pending subscription profile download events. In case the communication device 500 is a constrained IoT device, the communication with the SM-DP+ entity 600 or SM-DS entity 400 may be via the managing entity 300 as previously described.

The communication device 500 (e.g., the IPA 510) handles secure communication with the managing entity 300. The secure communication involves encryption, integrity protection, mutual authentication, and resource authorization at the communication device 500. The secure communication relies on key material being available at the communication device 500 and the managing entity 300. For example, a pre-shared key may be used or private-public key pairs and certificates for the two entities are used. There are many different ways of establishing the key material for secure communication between the managing entity 300 and the communication device 500. For example, the communication device 500 might be preinstalled during manufacturing with credentials and all the necessary information for establishing secure communication. In another example the communication device 500 is configured to perform a bootstrap process at first device power up in which ownership of the communication device 500 is taken and credentials for secure communication with the managing entity 300 is established. The subscriber module 200 is configured with the public key of the managing entity 300 for use in verifying signed PSMO commands.

The MNO/CSP entity 700 might represent a (Communications) Service Provider ((C)SP) that provides cellular connectivity for the communication device 500 for remote subscription profile download. The MNO/CSP entity 700 also receives orders for subscription profiles for the communication device 500 from the device owner or end-user 900, e.g. via the end-user device 800.

The SM-DP+ entity 600 handles subscription profile download to devices (such as IoT devices and consumer device) according to the aforementioned specification "SGP.22 - RSP Technical Specification v2.4". The SM-DP+ entity 600 is either operated by the MNO/CSP entity 700 providing the subscription profiles to be downloaded or by a third party trusted by the MNO/CSP entity 700. The SM-DP+ entity 600 is certified and has obtained certificates. Currently, GSMA is handling the certification and issuing of such certificates. The certificate for authentication and the certificate for profile download contains an SM-DP+ object identifier (OID). This OID is used by at least some of the herein disclosed embodiments to ensure communication is with the intended SM-DP+ entity 600.

The SM-DS entity 400 provides a discovery service for use by devices (such as IoT devices and consumer devices) according to the aforementioned specification "SGP.22 - RSP Technical Specification v2.4". The SM-DS entity 400 is certified and has obtained certificates. Currently, GSMA is handling the certification and issuing of such certificates. The certificate for authentication contains an SM-DS OID. This OID is used by at least some of the herein disclosed embodiments to ensure communication is with the intended SM-DS entity 400.

The managing entity 300 manages the communication device 500 on behalf of the device owner / end-user 900. The managing entity 300 handles profile management and may also assist in profile download interactions between the communication device 500 and the SM-DP+ entity 600 and between the communication device 500 and the SM-DS entity 400. The managing entity 300 may also handle device management operations and possibly also data management operations.

The managing entity 300 supports signed PSMOs using a managing entity private key whose corresponding public key is configured into each subscriber module 200 managed by the managing entity 300. The managing entity 300 is configured with a list of eUICC identifiers (EIDs) of communication devices 500, or subscriber modules 200, managed by the managing entity 300. The device owner / end-user 900 may interact, for example via the end-user device 800, with the managing entity 300 to configure the managing entity 300 with management operations. Such information may for example include the ICCID of a subscription profile of a particular subscriber modules 200 for which a particular profile management operation shall be performed or may include an Activation Code (AC) with information from where a particular communication device 500 shall download a subscription profile. In some examples, the managing entity 300 is an application running on the end-user device 800. In this case the end-user device 800 and managing entity 300 are implemented in the same physical device.

As disclosed above there is a need for more secure procedures for subscription profile download to the communication device 500.

The embodiments disclosed herein therefore relate to mechanisms for subscription profile download and installation to a subscriber module 200, and for enabling the subscription profile download and installation to the subscriber module 200. In order to obtain such mechanisms there is provided a subscriber module 200, a method performed by the subscriber module 200, a computer program product comprising code, for example in the form of a computer program, that when run on processing circuitry of the subscriber module 200, causes the subscriber module 200 to perform the method. In order to obtain such mechanisms there is further provided a managing entity 300, a method performed by the managing entity 300, and a computer program product comprising code, for example in the form of a computer program, that when run on processing circuitry of the managing entity 300, causes the managing entity 300 to perform the method. In order to obtain such mechanisms there is further provided an SM-DS entity 400, a method performed by the SM-DS entity 400, and a computer program product comprising code, for example in the form of a computer program, that when run on processing circuitry of the SM-DS entity 400, causes the SM-DS entity 400 to perform the method.

In at least some embodiments, the signed PSMOs are extended to protect also download and installation of subscription profiles into a subscriber module 200. The disclosed embodiments prevent against malwares being able to download and install rogue subscription profiles. The herein disclosed embodiments address three subscription profile download triggering options; triggering by means of an AC, using a default SM-DP+ entity 600, and event-based downloading using an SM-DS entity 400. At least some embodiments are based on download and installation data being provided to the subscriber module 200 for validation and, upon successful validation, the download and installation data is then used by the subscriber module 200 during download and installation of a subscription profile to ensure the download and installation is authorized.

The download and installation data is either signed or points to subscriber module internal data. In the first case, the download and installation data is signed and is verified by the subscriber module 200 in the same way as the signed PSMOs, and where the verified data is then used by the subscriber module 200 during download and installation of the subscription profile to ensure the download and installation is authorized.

In some embodiments, the managing entity 300 provides signed download and installation data in a request to the communication device 500 to trigger download and installation of a subscription profile.

In some embodiments, the download and installation data is not signed and points to the use of data stored internally in the subscriber module 200, such as the address and OID of a default SM-DP+ entity 600 or a default SM-DS entity 400.

In some embodiments, signed download and installation data has been prepared in advance, for example during device manufacturing, and is available in the communication device 500, e.g., for use in triggering subscription profile download and installation at first start-up of the communication device 500. The data may, for example, define a default SM-DP+ entity 600 or a default SM-DS entity 400 trusted for use in the subscription profile download and installation process.

The download and installation data comprises at least the OID of the SM-DP+ entity 600 and/or SM-DS entity 400 but may comprise also a Matching Id linking to a subscription profile prepared for download at the SM-DP+ entity 600, the address of the SM-DP+ entity 600 and/or SM-DS entity 400, a flag indicating automatic enabling of the subscription profile, the ICCID of the subscription profile, information on the MNO/CSP, such as the service provider name or mobile country code (MCC) plus mobile network code (MNC).

When using the SM-DS entity 400, the SM-DS event records provide new download and installation data for use during the subscription profile download and installation process. In order to allow the subscriber module 200 to trust the download and installation data, the data is signed by the SM-DS entity 400.

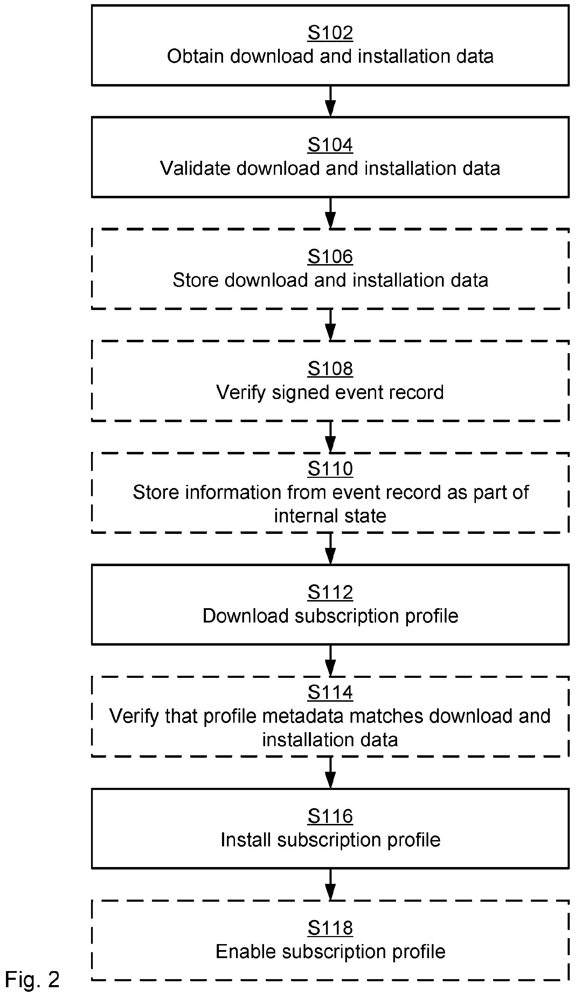

Reference is now made to Fig. 2 illustrating a method for subscription profile download and installation as performed by the subscriber module 200 according to an embodiment.

Download and installation data is provided to subscriber module 200 for validation. Upon successful validation, the download and installation data is used by the subscriber module 200 during download and installation of a subscription profile to ensure the download and installation is authorized.

S102: The subscriber module 200 obtains download and installation data for the subscription profile. The download and installation data identifies an OID of an SM-DP+ entity 600 and/or an SM-DS entity 400, for the subscriber module 200 to use when downloading and installing the subscription profile.

S104: The subscriber module 200 validates the download and installation data to ensure the download and installation data is acceptable by the subscriber module 200 for use in the subscription profile download and installation.

S112: The subscriber module 200 downloads the subscription profile from an SM-DP+ entity 600. The SM-DP+ entity 600 from which the subscription profile is to be downloaded from is either given by the OID identified by the download and installation data when the OID is of the SM-DP+ entity 600, or is given by an event record received by the subscriber module 200 from the SM-DS entity 400 when the OID identified by the download and installation data is of the SM-DS entity 400 and where the SM-DS entity 400 is given by the OID identified by the download and installation data.

S116: The subscriber module 200 installs the subscription profile in the subscriber module 200.

Embodiments relating to further details of subscription profile download and installation as performed by the subscriber module 200 will now be disclosed.

In some aspects, the download and installation data is stored when having been validated. That is, in some embodiments, the subscriber module 200 is configured to perform (optional) action S106.

S106: The subscriber module 200 stores the download and installation data as part of an internal state in the subscriber module 200 upon having validated the download and installation data and before downloading the subscription profile.

In some aspects, when the SM-DP+ entity 600, from which the subscription profile is to be downloaded, is given by the event record received by the subscriber module 200 from the SM-DS entity 400, information from the event record extends the download and installation data with new data for use in the profile download and installation. The information comprises an SM-DP+ address, an SM-DP+ OID, a matching identifier linking to the subscription profile prepared for download at the SM-DP+ entity 600. The information might further comprise any of: an indicator of automatic enabling of the subscription profile, an ICCID, of the subscription profile, and information on a mobile network operator or a communication service provider 700. The event record is signed by the SM-DS entity 400. Then, in some embodiments, the subscriber module 200 is configured to perform (optional) actions S108, S110.

S108: The subscriber module 200 verifies the signed event record.

S110: The subscriber module 200 stores, upon successful verification of the signed event record, the information from the event record as part of the internal state in the subscriber module 200. The information is either stored as new download and installation data or extends already stored download and installation data.

In some aspects, the subscriber module 200 verifies that received information from the SM-DP+ entity 600 matches the download and installation data, including updated download and installation data with event record information. In particular, in some embodiments, the subscriber module 200 verifies that information received from the SM-DP+ entity 600 in conjunction with downloading the subscription profile, and information received by a communication device 500 in which the subscriber module 200 resides and to be provided to the SM-DP+ entity 600 in conjunction with downloading the subscription profile, matches the download and installation data.

In some embodiments, the subscriber module 200 verifies that information received from the SM-DP+ entity 600 matches the DID during authentication of the SM-DP+ entity 600.

In some aspects, the subscriber module 200 verifies that received information from the SM-DS entity 400 matches the download and installation data. In particular, in some embodiments, the subscriber module 200 verifies, in conjunction with downloading the subscription profile, that information received from the SM-DS entity 400 and information received by a communication device 500 in which the subscriber module 200 resides and to be provided to the SM-DS entity 400 matches the download and installation data.

In some embodiments, the subscriber module 200 verifies that information received from the SM-DS entity 400 matches the DID during authentication of the SM-DS entity 400.

In some aspects, the subscriber module 200 verifies the event record a using public key obtained during authentication with the SM-DS entity 400. In particular, in some embodiments, the event record is signed using a private key of the SM-DS entity 400 and is verified by the subscriber module 200 using a corresponding SM-DS public key obtained during the authentication of the SM-DS entity 400.

In some aspects, the subscriber module 200 verifies that profile metadata of a Bound Profile Package (BPP) matches the download and installation data. In particular, in some embodiments, the subscription profile is downloaded in a Bound Profile Package (BPP) format that comprises profile metadata, and, the subscriber module 200 is configured to perform (optional) action S114.

S114: The subscriber module 200 verifies that the profile metadata matches the download and installation data before installing the subscription profile.

In some aspects, the subscription profile is enabled upon having been downloaded and installed (and stored). Thus, in some embodiments, the subscriber module 200 is configured to perform (optional) action S118.

S118: The subscriber module 200 enables the subscription profile in the subscriber module 200 upon having installed the subscription profile.

In some embodiments, the download and installation data identifies the OID by the OID being part of the download and installation data.

In some embodiments, the download and installation data is obtained by being received from a managing entity 300.

In some embodiments, the download and installation data is signed by a private key of the managing entity 300. The subscriber module 200 has access to a public key of the managing entity 300. The download and installation data is then validated by the subscriber module 200 verifying the signed DID by using the public key of the managing entity 300.

In some embodiments, the subscriber module 200 comprises an internal storage, where the internal storage is pre-configured with default SM-DP+ and/or SM-DS information that comprises an OID of the SM-DP+ entity 600 or SM-DS entity 400. The download and installation data might then identify the OID by the download and installation data comprising an indicator for the subscriber module 200 to use the OID as stored in the internal storage of the subscriber module 200. Such an indicator may also indicate to use other data, such as the address of the SM-DP+ entity 600 or SM-DS entity 400, as stored in the internal storage of the subscriber module 200.

In some embodiments, the subscriber module 200 comprises subscriber module configurations describing usage of the default SM-DP+ and/or SM-DS information in profile download and installation. The download and installation data might then be validated by the subscriber module 200 verifying that download of the subscription profile using the download and installation data is allowed according to the subscriber module 200 configuration.

In some embodiments, the download and installation data is signed by a private key of the managing entity 300 or a manufacturer of the subscriber module 200. The subscriber module 200 has access to a public key of the managing entity 300 or the manufacturer. The download and installation data is pre-stored in the communication device 500 in which the subscriber module 200 resides and provided to the subscriber module 200. The download and installation data might then be validated by the subscriber module 200 verifying the signed DID by using the public key of the managing entity 300 or the manufacturer.

In some embodiments, the download and installation data further comprises any of: a matching identifier linking to the subscription profile prepared for download at the SM-DP+ entity 600, an address of the SM-DP+ entity 600, an address of the SM-DS entity 400, an ICCID of the subscription profile, information of an MNO or a CSP.

In some embodiments, the download and installation data further comprises an indicator of automatic enabling of the subscription profile.

In some embodiments, the indicator is a flag that when set, and upon successful validation of the DID, results in a flag being stored in the internal state of the subscriber module indicating and granting automatic enabling until the subscription profile has been enabled in the subscriber module 200.

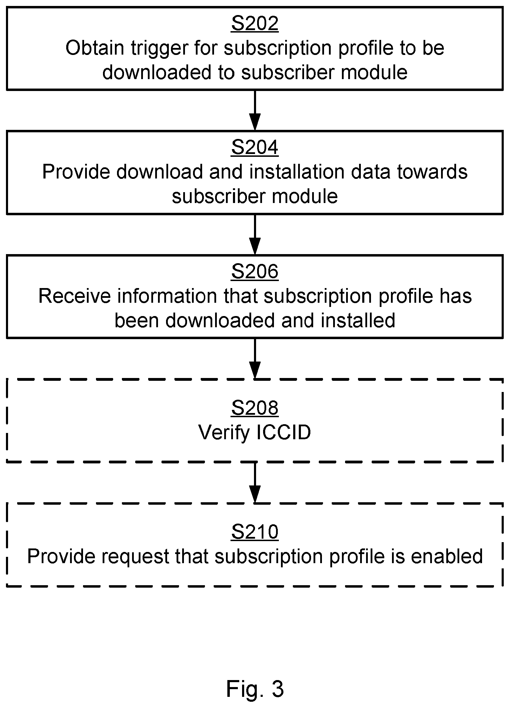

Reference is now made to **Fig. 3** illustrating a method for enabling subscription profile download and installation to a subscriber module 200 as performed by the managing entity 300 according to an embodiment.

A method for enabling subscription profile download and installation to a subscriber module 200. The method is performed by a managing entity 300. The method comprises:
S202: The managing entity 300 obtains a trigger for the subscription profile to be downloaded to the subscriber module 200.
S204: The managing entity 300 provides, towards the subscriber module 200, download and installation data, for the subscription profile. The download and installation data identifies an OID of an SM-DP+ entity 600 and/or an SM-DS, entity 400 for the subscriber module 200 to use when downloading and installing the subscription profile.
S206: The managing entity 300 receives, from the subscriber module 200, information that the subscription profile has been downloaded to and installed in the subscriber module 200. The information comprises an ICCID of the subscription profile.

Embodiments relating to further details of enabling subscription profile download and installation to a subscriber module 200 as performed by the managing entity 300 will now be disclosed.

In some aspects, the managing entity 300 requests the subscriber module 200 to enable the subscription profile upon the managing entity 300 having verified the ICCID. In some embodiments, the managing entity 300 is therefore configured to perform (optional) action S208 and action S210.

S208: The managing entity 300 verifies the ICCID.

S210: The managing entity 300 provides, towards the subscriber module 200, a request for the subscriber module 200 to enable the subscription profile.

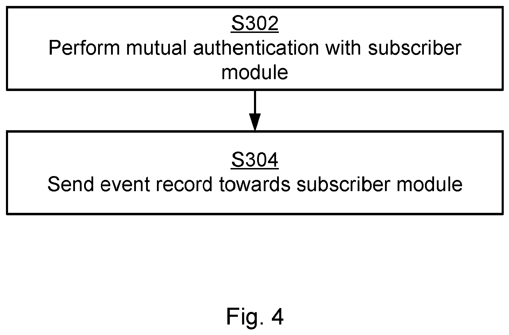

Reference is now made to Fig. 4 illustrating a method for enabling subscription profile download and installation to a subscriber module 200 as performed by the SM-DS entity 400 according to an embodiment.

S302: The SM-DS entity 400 performs mutual authentication with the subscriber module 200.

S304: The SM-DS entity 400 sends, towards the subscriber module 200, an event record. The event record is signed by the SM-DS entity 400 and comprises an OID of an SM-DP+ entity 600 for the subscriber module 200 to use when downloading and installing the subscription profile.

Embodiments relating to further details of enabling subscription profile download and installation to a subscriber module 200 as performed by the SM-DS entity 400 will now be disclosed.

In some aspects, the event record is signed with the same key as used during mutual authentication. Particularly, in some embodiments, performing the mutual authentication with the subscriber module 200 comprises the SM-DS entity 400 to use a private key of the SM-DS entity 400. The event record is signed by the private key.

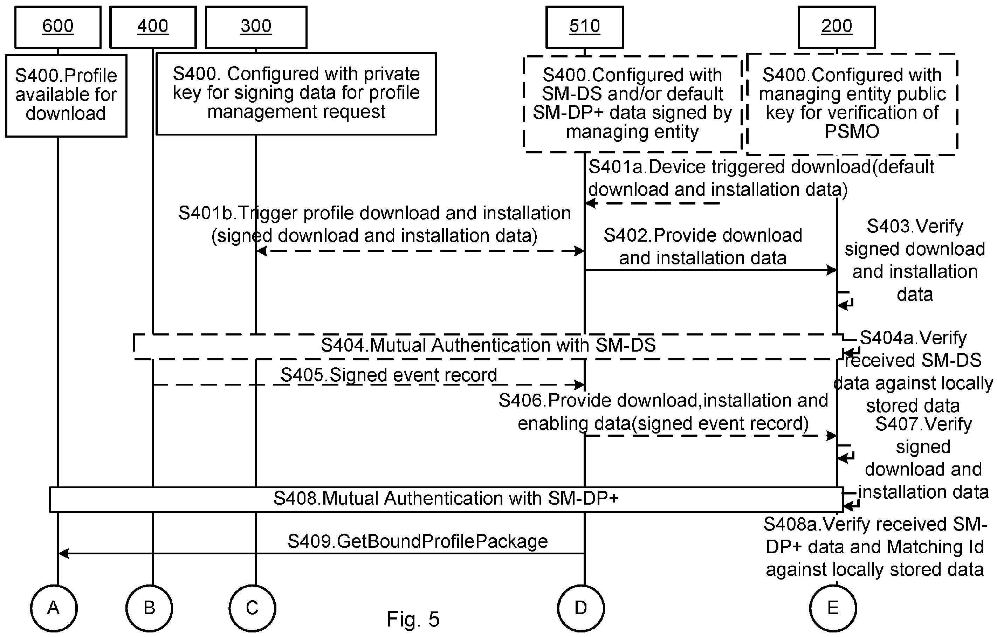

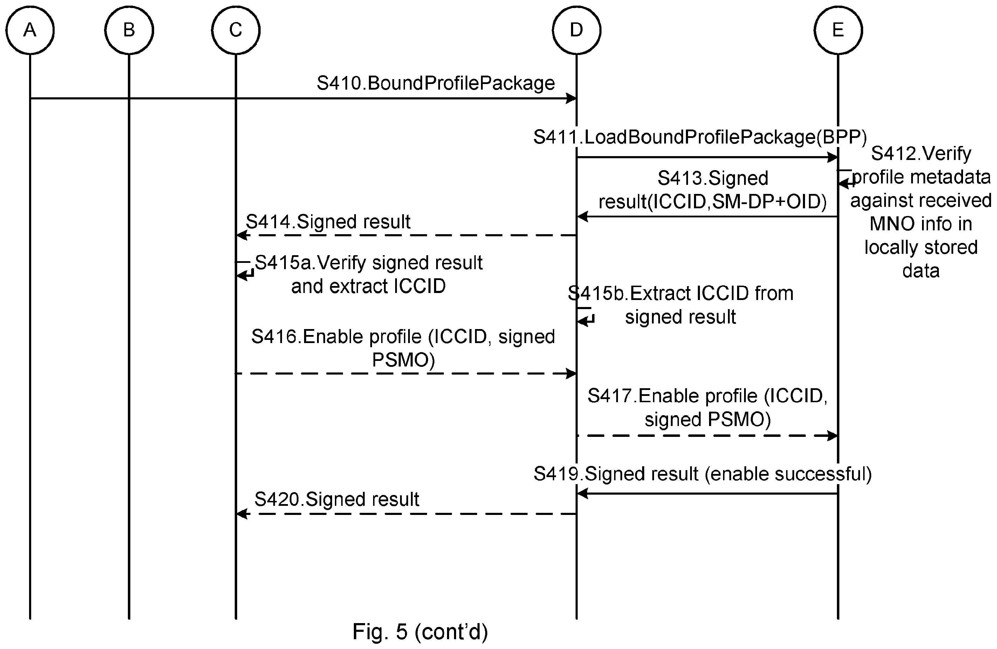

One particular embodiment where subscription profile download and installation is triggered by the managing entity 300 based on at least some of the above disclosed embodiments will now be disclosed in detail with reference to the signalling diagram of Fig. 5.

S400: A subscription profile for a particular communication device 500 is available for download at SM-DP+ entity 600. Managing entity 300 is configured with a private key for signing data for subscription profile download and management requests to subscriber module 200. Subscriber module 200 is configured with the corresponding public key. Managing entity 300 has obtained information to trigger subscription profile download for a particular communication device 500. This may be in the form of an AC, or information to trigger subscription profile download using a default SM-DP+ entity 600 or an SM-DS entity 400.

S401: Secure communication is established between managing entity 300 and IPA 510 in communication device 500. Managing entity 300 triggers subscription profile download by sending a request to trigger subscription profile download to IPA 510 (see, action S401b). The request contains signed download and installation data as signed with the private key of managing entity 300. In the case of an AC, the signed download and installation data comprises at least the SM-DP+ OID and the Matching Id and may also comprise the address of SM-DP+ entity 600. In the case of download from default SM-DP+ entity 600, the signed download and installation data comprises either an indicator to use default SM-DP+ data from the subscriber module 200 or at least the OID of the SM-DP+ entity 600 and the Matching Id set to zero and may also comprise the address of the SM-DP+ entity 600. In the case of using a default SM-DP+ entity 600, since the matching ID is not used to uniquely select a particular subscription profile at the SM-DP+ entity 600, assuming several subscription profiles are prepared for a given subscriber module 200, the signed download and installation data may also comprise the ICCID or MNO/CSP information. In the case of a trigger to use SM-DS entity 400, the signed download and installation data comprises the OID of the SM-DS entity 400 and may comprise the address of the SM-DS entity 400. Independent of the download option, the signed download and installation data may contain a flag set to indicate automatic enabling of the subscription profile.

S402: IPA 510 processes the request from managing entity 300 and provides the download and installation data to the subscriber module 200.

S403: Subscriber module 200 validates the download and installation data. In this case the data is signed and validation is performed by verifying the signature using the public key of managing entity 300. The subscriber module 200 saves the received download and installation data as part of its internal state.

S404: This action is only performed in case of SM-DS entity 400 being used. IPA 510 establishes secure communication with the SM-DS entity 400 (using HTTPS). In case of communication device 500 being a constrained IoT device, the communication may be via managing entity 300 where the secure communication established in action S401 is leveraged and managing entity 300 also establishes secure communication with the SM-DS entity 400 (using HTTPS). Mutual authentication is performed between subscriber module 200 and SM-DS entity 400. In addition, as here denoted as action S404a, subscriber module 200 verifies that the received information from SM-DS entity 400, i.e., the OID of the SM-DS entity 400 in the SM-DS certificate and the SM-DS address part of serverSigned1 matches the stored download and installation data. If not, the subscription profile download is aborted. An AuthenticateServer function in the subscriber module 200 may be configured to perform this check.

S405: This action is only performed in case of SM-DS entity 400 being used. In case of successful mutual authentication in action S404, SM-DS entity 400 checks if there are any events available for the communication device 500 identified by the EID as part of the mutual authentication and, in case there is an event, provides to IPA 510 an event record containing signed information by the SM-DS entity 400 using the private key of the SM-DS entity 400 (i.e., the same private key as used in the mutual authentication). The signed information comprises at least the SM-DP+ OID of the SM-DP+ entity 600 for where the subscription profile shall be downloaded and the matching Id. The signed information may also include the address of the SM-DS entity 400.

S406: This action is only performed in case of SM-DS entity 400 being used. IPA 510 extracts download information from the event record and provides the signed data from the event record to subscriber module 200 as new download and installation data.

S407: This action is only performed in case of SM-DS entity 400 being used. Subscriber module 200 validates the download and installation data by verifying the signature using the public key of the SM-DS entity 400 obtained from the SM-DS certificate in the mutual authentication. Subscriber module 200 saves the received download and installation data as part of its internal state, e.g. by updating already stored/saved download and installation data from action S403.

S408: IPA 510 establishes secure communication with SM-DP+ entity 600 (using HTTPS). In case of communication device 500 being a constrained IoT device, the communication may be via managing entity 300 where the secure communication established in action S401 is leveraged and managing entity 300 also establishes secure communication with SM-DP+ entity 600 (using HTTPS). Mutual authentication is performed between subscriber module 200 and SM-DP+ entity 600. In addition, as here denoted as action S408a, subscriber module 200 verifies that received information from SM-DP+ entity 600, i.e., the SM-DP+ OID in the SM-DP+ certificate, the SM-DP+ address part of serverSigned1, and matching Id if present (otherwise matching Id is assumed to be zero), matches the stored download and installation data. If not, the subscription profile download is aborted. For example, the AuthenticateServer function in the subscriber module 200 may be configured to perform this check.

S409: In case of successful mutual authentication, IPA 510 requests the subscription profile in protected form including metadata, i.e. the Bound (subscription) Profile Package (BPP) from SM-DP+ entity 600.

S410: SM-DP+ entity 600 provides the BPP to IPA 510.

S411: IPA 510 provides the BPP to subscriber module 200 for verification and installation.

S412: In addition to the GSMA standard verification and installation procedure, subscriber module 200 verifies that subscription profile metadata of the BPP matches any subscription profile metadata in the stored download and installation data, if present. Examples of such metadata that may be matched are ICCID, service provider name, and MCC plus MNC.

S413: In case of successful subscription profile installation, subscriber module 200 provides to IPA 510 a signed result indicating successful installation and comprising a unique subscription profile identifier, such as ICCID or Issuer Security Domain - Profile - Application Identifier (ISD-P AID). In this respect, the ISD-P AID is the Application Identifier to identify the particular ISD-P in which a particular subscription profile is installed. The signed result also comprises the SM-DP+ OID. The signed result may be the (subscription) ProfileInstallationResult notification as part of the standard GSMA eSIM. Note that IPA 510 sends a (subscription) ProfileInstallationResult notification obtained from subscriber module 200 to the SM-DP+ entity 600. This is not shown in the figure to reduce the complexity. In case of communication device 500 being a constrained device, the notification is delivered via managing entity 300 (in action S414) to SM-DP+ entity 600.

S414: In case the automatic enabling of the subscription profile is not performed, IPA 510 provides the signed result back to managing entity 300. Any notifications received by managing entity 300 for the SM-DP+ entity 600 is forwarded by managing entity 300 towards SM-DP+ entity 600.

S415: In case the automatic enabling of the subscription profile is not performed (action S415a) managing entity 300 verifies the signed result and extracts the ICCID (and/or ISDP-AID). If the ICCID is already known to managing entity 300, managing entity 300 verifies that the two ICCID values match.

S416: In case the automatic enabling of the subscription profile is not performed, managing entity 300 sends a request to IPA 510 to enable the subscription profile. The request contains signed data by managing entity 300 comprising the enable subscription profile operation and the ICCID (or ISD-P AID).

S417: IPA 510 request subscriber module 200 to enable the subscription profile and provides the signed data from the request in action S416 to subscriber module 200.

S418: If the automatic enabling flag is not set as part of the stored download and installation data, subscriber module 200 verifies the signature, and upon successful verification, enables the subscription profile (identified by the ICCID or ISD-P AID).

S419: In case of successful enabling of the subscription profile, subscriber module 200 provides a signed result indicating successful enabling. Such signed result may be the EnableProfile notification of the GSMA eSIM standard. Note that IPA 510 sends an EnableProfile notification obtained from subscriber module 200 to the SM-DP+ entity 600. This is not shown in the figure to reduce the complexity. In case of communication device 500 being a constrained device the notification is delivered via managing entity 300 (in action S420) to SM-DP+ entity 600.

S420: The signed result is validated by managing entity 300. Upon successful validation and indication of success enabling, managing entity 300 updates its state about the active subscription profile of subscriber module 200. Any notifications received by managing entity 300 for the SM-DP+ entity 600 is forwarded by managing entity 300 towards SM-DP+ entity 600.

In the embodiment disclosed with reference to Fig. 5, the stored (and trusted) download and installation data in action S404 is, in case of the SM-DS entity 400 being used, used by the subscriber module 200 to ensure only the intended SM-DS entity 400 can provide information about the SM-DP+ entity 600 from where the subscription profile shall be downloaded. The SM-DS OID is part of the SM-DS certificate that is verified by the subscriber module 200 and the subscriber module 200 checks that the SM-DS OID matches the SM-DS OID in the stored download and installation data. The signing of the data in the event record in action S405 prevents malwares from modifying this data and allows the subscriber module 200 to securely update its download and installation data in action S407.

In action S408 the stored (and trusted) download and installation data is, for all download options, used to by the subscriber module 200 ensure only the intended SM-DP+ entity 600 can download the subscription profile. The SM-DP+ OID is part of the SM-DP+ certificate that is verified by the subscriber module 200 and the subscriber module 200 checks that the SM-DP+ OID matches the SM-DP+ OID in the stored download and installation data. In case a Matching Id is available in the download and installation data the subscriber module 200 ensures only the subscription profile linked to that Matching Id can be downloaded. In case the there is no Matching Id, but the download and installation data contains either the ICCID or MNO/CSP information (service provider name and/or MCC and MNC), the subscriber module 200 may in action S412 check, before installation, that the downloaded subscription profile metadata matches this data. It is noted that the mutual authentication and subscription profile download session are linked preventing a malware to present a completely different BPP obtained from a different SM-DP+. For example, the transactionId of the GSMA consumer eSIM variant is part of both the BPP and the mutual authentication exchanged data. Furthermore, the BPP is signed using a private key whose certificate has the same SM-DP+ OID included as was verified by the subscriber module 200 in action S408. The subscriber module 200 verifies these links, which is already part of the GSMA eSIM consumer standard. The (subscription) ProfileInstallationResult and the signed result of action S413 contains the ICCID and SM-DP+ OID.

The managing entity 300 might not know the ICCID of the subscription profile that it shall request to be enabled in action S416. For example, the managing entity 300 may have received only an AC without information on the subscription profile ICCID, or the managing entity 300 may have obtained a list of ACs and list of ICCIDs for a batch of communication devices and simply picked one from the list for this particular communication device 500, or subscriber module 200, and is then not able to know to which ICCID it corresponds. The signed result in action S414 allows the managing entity 300 to securely obtain information about the ICCID of the subscription profile that was installed. The signed PSMO for enabling the subscription profile where the ICCID is contained ensures that a malware cannot modify the ICCID and enable another subscription profile on the subscriber module 200.

In case of an automatic subscription profile enabling flag being set in the signed download and installation data of action S401b, method in Fig. 5 differs in the following actions:
Actions S414 and S416 are not performed.
Action S415b is performed instead of action S415a, where IPA 510 extracts ICCID (or ISD-P AID) from the BPP or the signed result.

In action S417 the request to enable the subscription profile does not contain a correctly signed data indicating subscription profile enabling. For example, a dummy signature may be used or the signature is left out.

In action S418, in case subscriber module 200 finds that the automatic subscription profile enabling flag is set in the stored download and installation data, subscriber module 200 accepts the subscription profile enable request without validating any signature of the input data.

In action S420, the result contains both the signed result obtained from subscriber module 200 in action S413 and the signed result obtained from subscriber module 200 in action S419.

It is noted that the stored download and installation data is valid only during a download and installation session and is erased upon successful subscription profile installation, in case of an error in the download and installation, or in case the download and installation is aborted. The automatic enable flag, if set, is kept until the subscription profile is enabled.

One particular embodiment where subscription profile download and installation is triggered by the communication device 500 and using subscriber module internal data based on at least some of the above disclosed embodiments will now be disclosed in detail. Continued reference is made to Fig. 5. The method differs from the method in Fig. 5 as follows.

S400': A subscription profile for a particular communication device 500 is available for download at SM-DP+ entity 600. Managing entity 300 might not be involved in this particular embodiment. If involved, managing entity 300 is configured with a private key for signing data for subscription profile download and management requests to subscriber module 200, and subscriber module 200 may be configured with the corresponding public key. Subscriber module 200 is configured with default SM-DP+ data and/or SM-DS data depending on the download mode to be used. This data comprises the SM-DP+ or SM-DS OID and the SM-DP+ or SM-DS address.

S401': Communication device 500 itself triggers subscription profile download, e.g., based on first start-up of communication device 500. The trigger is provided to IPA 510 (see action S401a) and contains unsigned download and installation data indicating either download from a default SM-DP+ entity 600 or download using SM-DS entity 400. The data indicates the use of download and installation information internally stored in the subscriber module 200. A flag to indicate automatic enabling of the subscription profile might be set.

S402': IPA 510 process the request for subscription profile download and provides the download and installation data to subscriber module 200.

S403': Subscriber module 200 validates the download and installation data. In this case the data points to use internal subscriber module data and subscriber module 200 checks that subscription profile download using such data is allowed according to subscriber module configurations and that such a data is available. In case the automatic enabling flag is set, subscriber module 200 also checks that automatic enabling is allowed according to the subscriber module configurations. Subscriber module 200 saves the determined download and installation data as part of its internal state.

Actions S404' - S413' are identical to actions S404 - S413. In action S412' there might neither be ICCID nor MNO/CSP information available in the saved download and installation data. Actions S413' - S420' are identical to actions S413 - S420 and it depends on whether the automatic enabling flag is set or not set how the actions are performed as described above with reference to Fig. 5. If there is not any automatic enabling flag set, communication device 500 establishes secure communication with managing entity 300 in action S414' and reports the result of the subscription profile installation in order to trigger managing entity 300 to enable the subscription profile. If there is not any managing entity 300 configured, the automatic enabling flag must be set in order to allow the subscription profile to be enabled.

One particular embodiment where subscription profile download and installation is triggered by the communication device 500 using pre-signed data based on at least some of the above disclosed embodiments will now be disclosed in detail. Continued reference is made to Fig. 5.

In this particular embodiment, subscription profile download and installation triggered by the communication device 500 using pre-signed data containing default SM-DP+ data and/or SM-DS data. The data may be signed by the managing entity 300 or another entity signs. For example, the data might be signed by the device manufacturer, using its private key, during device manufacturing. The device manufacturer then acts as a temporary managing entity and the subscriber module 200 is then configured with the device manufacturer public key. The manufacturer public key may be securely removed as soon as the operational managing entity 300 is configured, preventing the manufacturer from performing future subscription profile state management operations on the communication device 500. The managing entity 300 in Fig. 1 as well as in Fig. 5 refers to the operational managing entity 300 and might not be used in this particular embodiment if instead a temporary managing entity is used according to the description above.

The method differs from the method in Fig. 5 as follows.

S400": A subscription profile for a particular communication device 500 is available for download at SM-DP+ entity 600. Managing entity 300 might not be involved in this particular embodiment. If involved, managing entity 300 is configured with a private key for signing data for subscription profile download and management requests to subscriber module 200, and subscriber module 200 may be configured with the corresponding public key. Subscriber module 200 is configured with the public key of the temporary managing entity. Subscriber module 200 is configured with default SM-DP+ data and/or SM-DS data depending on the download mode to be used. This data comprises at least the SM-DP+/SM-DS OID and the SM-DP+/SM-DS address. The data is signed according to above description.

S401": Communication device 500 itself triggers subscription profile download, e.g., based on first start-up of communication device 500. The trigger is provided to IPA 510 (see action S401a) and contains signed download and installation data indicating either download from a default SM-DP+ entity 600 or download using SM-DS entity 400. The trigger contains the SM-DP+/SM-DS data. The flag to indicate automatic enabling of the subscription profile might be set.

S402": IPA 510 process the request for subscription profile download and provides the download and installation data to subscriber module 200.

S403": Subscriber module 200 validates the download and installation data by verifying its signature using the temporary managing entity public key configured in subscriber module 200. Subscriber module 200 saves the determined download and installation data as part of its internal state.

Actions S404" - S413" are identical to actions S404 - S413. In action S412" there might neither be ICCID nor MNO/CSP information available in the saved download and installation data. Actions S413' - S420' are identical to actions S413 - S420 and it depends on whether the automatic enabling flag is set or not set how the actions are performed as described above with reference to Fig. 5. If there is not any automatic enabling flag set, communication device 500 establishes secure communication with managing entity 300 in action S414" and report the result of the subscription profile installation in order to trigger managing entity 300 to enable the subscription profile. If there is not any managing entity 300 configured, the automatic enabling flag must be set in order to allow the subscription profile to be enabled.

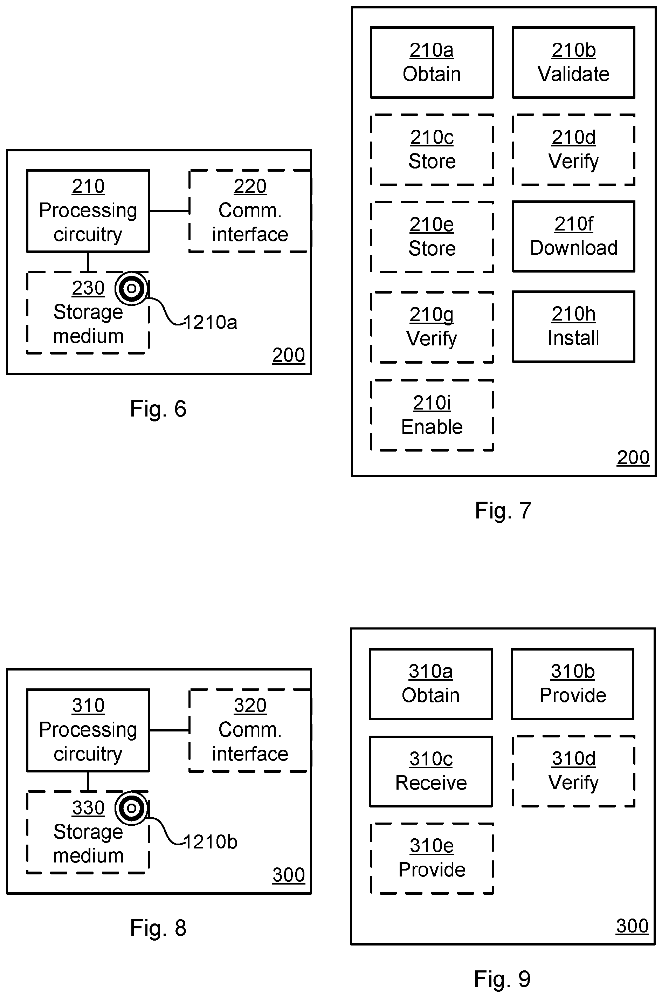

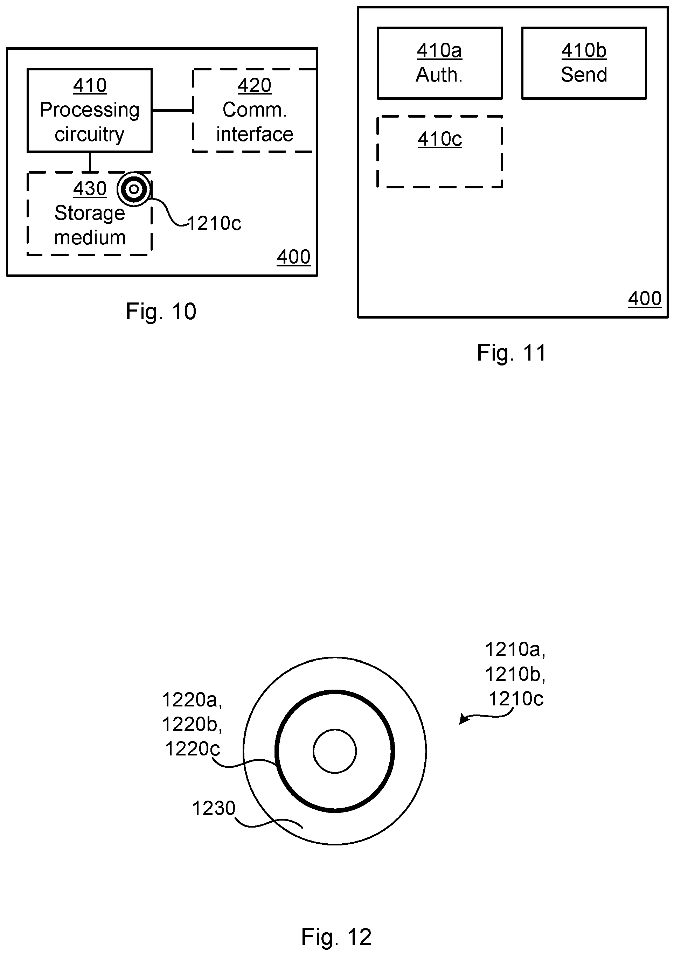

**Fig. 6** schematically illustrates, in terms of a number of functional units, the components of a subscriber module 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 1210a (as in Fig. 12), e.g. in the form of a storage medium 230. The processing circuitry 210 may further be provided as at least one application specific integrated circuit (ASIC), or field programmable gate array (FPGA).

Particularly, the processing circuitry 210 is configured to cause the subscriber module 200 to perform a set of operations, or actions, as disclosed above. For example, the storage medium 230 may store the set of operations, and the processing circuitry 210 may be configured to retrieve the set of operations from the storage medium 230 to cause the subscriber module 200 to perform the set of operations. The set of operations may be provided as a set of executable instructions. Thus the processing circuitry 210 is thereby arranged to execute methods as herein disclosed.

The storage medium 230 may also comprise persistent storage, which, for example, can be any single one or combination of magnetic memory, optical memory, solid state memory or even remotely mounted memory.

The subscriber module 200 may further comprise a communications interface 220 for communications with other entities, functions, nodes, and devices, as in Fig. 1. As such the communications interface 220 may comprise one or more transmitters and receivers, comprising analogue and digital components.

The processing circuitry 210 controls the general operation of the subscriber module 200 e.g. by sending data and control signals to the communications interface 220 and the storage medium 230, by receiving data and reports from the communications interface 220, and by retrieving data and instructions from the storage medium 230. Other components, as well as the related functionality, of the subscriber module 200 are omitted in order not to obscure the concepts presented herein.

**Fig. 7** schematically illustrates, in terms of a number of functional modules, the components of a subscriber module 200 according to an embodiment. The subscriber module 200 of Fig. 7 comprises a number of functional modules; an obtain module 210a configured to perform action S102, a validate module 210b configured to perform action S104, a download module 210f configured to perform action S112, and an install module configured to perform action S116. The subscriber module 200 of Fig. 7 may further comprise a number of optional functional modules, such as any of a store module 210c configured to perform action S106, a verify module 210d configured to perform action S108, a store module 210e configured to perform action S110, a verify module 210g configured to perform action S112, and an enable module 210i configured to perform action S116. In general terms, each functional module 210a:210i may be implemented in hardware or in software. Preferably, one or more or all functional modules 210a:210i may be implemented by the processing circuitry 210, possibly in cooperation with the communications interface 220 and the storage medium 230. The processing circuitry 210 may thus be arranged to from the storage medium 230 fetch instructions as provided by a functional module 210a:210i and to execute these instructions, thereby performing any actions of the subscriber module 200 as disclosed herein.

**Fig. 8** schematically illustrates, in terms of a number of functional units, the components of a managing entity 300 according to an embodiment. Processing circuitry 310 is provided using any combination of one or more of a suitable central processing unit (CPU), multiprocessor, microcontroller, digital signal processor (DSP), etc., capable of executing software instructions stored in a computer program product 1210b (as in Fig. 12), e.g. in the form of a storage medium 330. The processing circuitry 310 may further be provided as at least one application specific integrated circuit (ASIC), or field programmable gate array (FPGA).

Particularly, the processing circuitry 310 is configured to cause the managing entity 300 to perform a set of operations, or actions, as disclosed above. For example, the storage medium 330 may store the set of operations, and the processing circuitry 310 may be configured to retrieve the set of operations from the storage medium 330 to cause the managing entity 300 to perform the set of operations. The set of operations may be provided as a set of executable instructions. Thus the processing circuitry 310 is thereby arranged to execute methods as herein disclosed.

The storage medium 330 may also comprise persistent storage, which, for example, can be any single one or combination of magnetic memory, optical memory, solid state memory or even remotely mounted memory.

The managing entity 300 may further comprise a communications interface 320 for communications with other entities, functions, nodes, and devices, as in Fig. 1. As such the communications interface 320 may comprise one or more transmitters and receivers, comprising analogue and digital components.

The processing circuitry 310 controls the general operation of the managing entity 300 e.g. by sending data and control signals to the communications interface 320 and the storage medium 330, by receiving data and reports from the communications interface 320, and by retrieving data and instructions from the storage medium 330. Other components, as well as the related functionality, of the managing entity 300 are omitted in order not to obscure the concepts presented herein.

**Fig. 9** schematically illustrates, in terms of a number of functional modules, the components of a managing entity 300 according to an embodiment. The managing entity 300 of Fig. 9 comprises a number of functional modules; an obtain module 310a configured to perform action S202, a provide module 310b configured to perform action S204, and a receive module 310c configured to perform action S206. The managing entity 300 of Fig. 9 may further comprise a number of optional functional modules, such as any of a verify module 310d configured to perform action S208, and a provide module 3 10e configured to perform action S210. In general terms, each functional module 310a:310e may be implemented in hardware or in software. Preferably, one or more or all functional modules 310a:310e may be implemented by the processing circuitry 310, possibly in cooperation with the communications interface 320 and the storage medium 330. The processing circuitry 310 may thus be arranged to from the storage medium 330 fetch instructions as provided by a functional module 310a:310e and to execute these instructions, thereby performing any actions of the managing entity 300 as disclosed herein.

**Fig. 10** schematically illustrates, in terms of a number of functional units, the components of an SM-DS entity 400 according to an embodiment. Processing circuitry 410 is provided using any combination of one or more of a suitable central processing unit (CPU), multiprocessor, microcontroller, digital signal processor (DSP), etc., capable of executing software instructions stored in a computer program product 1210c (as in Fig. 12), e.g. in the form of a storage medium 430. The processing circuitry 410 may further be provided as at least one application specific integrated circuit (ASIC), or field programmable gate array (FPGA).

Particularly, the processing circuitry 410 is configured to cause the SM-DS entity 400 to perform a set of operations, or actions, as disclosed above. For example, the storage medium 430 may store the set of operations, and the processing circuitry 410 may be configured to retrieve the set of operations from the storage medium 430 to cause the SM-DS entity 400 to perform the set of operations. The set of operations may be provided as a set of executable instructions. Thus the processing circuitry 410 is thereby arranged to execute methods as herein disclosed.

The storage medium 430 may also comprise persistent storage, which, for example, can be any single one or combination of magnetic memory, optical memory, solid state memory or even remotely mounted memory.

The SM-DS entity 400 may further comprise a communications interface 420 for communications with other entities, functions, nodes, and devices, as in Fig. 1. As such the communications interface 420 may comprise one or more transmitters and receivers, comprising analogue and digital components.

The processing circuitry 410 controls the general operation of the SM-DS entity 400 e.g. by sending data and control signals to the communications interface 420 and the storage medium 430, by receiving data and reports from the communications interface 420, and by retrieving data and instructions from the storage medium 430. Other components, as well as the related functionality, of the SM-DS entity 400 are omitted in order not to obscure the concepts presented herein.

**Fig. 11** schematically illustrates, in terms of a number of functional modules, the components of an SM-DS entity 400 according to an embodiment. The SM-DS entity 400 of Fig. 11 comprises a number of functional modules; an authentication (Auth.) module 410a configured to perform action S302, and a send module 410b configured to perform action S302. The SM-DS entity 400 of Fig. 11 may further comprise a number of optional functional modules, as represented by functional module 410c. In general terms, each functional module 410a:410c may be implemented in hardware or in software. Preferably, one or more or all functional modules 410a:410c may be implemented by the processing circuitry 410, possibly in cooperation with the communications interface 420 and the storage medium 430. The processing circuitry 410 may thus be arranged to from the storage medium 430 fetch instructions as provided by a functional module 410a:410c and to execute these instructions, thereby performing any actions of the SM-DS entity 400 as disclosed herein.

**Fig. 12** shows one example of a computer program product 1210a, 1210b, 1210c comprising computer readable means 1230. On this computer readable means 1230, a computer program 1220a can be stored, which computer program 1220a can cause the processing circuitry 210 and thereto operatively coupled entities and devices, such as the communications interface 220 and the storage medium 230, to execute methods according to embodiments described herein. The computer program 1220a and/or computer program product 1210a may thus provide means for performing any actions of the subscriber module 200 as herein disclosed. On this computer readable means 1230, a computer program 1220b can be stored, which computer program 1220b can cause the processing circuitry 310 and thereto operatively coupled entities and devices, such as the communications interface 320 and the storage medium 330, to execute methods according to embodiments described herein. The computer program 1220b and/or computer program product 1210b may thus provide means for performing any actions of the managing entity 300 as herein disclosed. On this computer readable means 1230, a computer program 1220c can be stored, which computer program 1220c can cause the processing circuitry 410 and thereto operatively coupled entities and devices, such as the communications interface 420 and the storage medium 430, to execute methods according to embodiments described herein. The computer program 1220c and/or computer program product 1210c may thus provide means for performing any actions of the SM-DS entity 400 as herein disclosed.

In the example of Fig. 12, the computer program product 1210a, 1210b, 1210c is illustrated as an optical disc, such as a CD (compact disc) or a DVD (digital versatile disc) or a Blu-Ray disc. The computer program product 1210a, 1210b, 1210c could also be embodied as a memory, such as a random access memory (RAM), a read-only memory (ROM), an erasable programmable read-only memory (EPROM), or an electrically erasable programmable read-only memory (EEPROM) and more particularly as a nonvolatile storage medium of a device in an external memory such as a USB (Universal Serial Bus) memory or a Flash memory, such as a compact Flash memory. Thus, while the computer program 1220a, 1220b, 1220c is here schematically shown as a track on the depicted optical disk, the computer program 1220a, 1220b, 1220c can be stored in any way which is suitable for the computer program product 1210a, 1210b, 1210c.

The inventive concept has mainly been described above with reference to a few embodiments. The invention is defined in the independent claims. Advantageous features are described in the dependent claims.

## Claims

1. A method for subscription profile download and installation, the method being performed by a subscriber module (200), the method comprising:
obtaining (S102) download and installation data, DID, for the subscription profile, wherein the DID identifies
an object identifier, OID, of a Subscription Manager Data Preparation, SM-DP+, entity (600) for the subscriber module (200) to use when downloading and installing the subscription profile, and an address of the SM-DP+ entity (600), and/or
an address of a Subscription Management Discovery Server, SM-DS, entity (400), and an object identifier, OID, of the SM-DS entity (400) for the subscriber module (200) to use when downloading and installing the subscription profile;
validating (S104) the DID to ensure the DID is acceptable by the subscriber module (200) for use in the subscription profile download and installation;
downloading (S112) the subscription profile from an SM-DP+ entity (600), wherein the SM-DP+ entity (600) from which the subscription profile is to be downloaded from is either given by the OID identified by the DID when the OID is of the SM-DP+ entity (600), or is given by an event record received by the subscriber module (200) from the SM-DS entity (400) when the OID identified by the DID is of the SM-DS entity (400) and wherein the SM-DS entity (400) is given by the OID identified by the DID; and
installing (S116) the subscription profile in the subscriber module (200).

2. The method according to claim 1, wherein, when the SM-DP+ entity (600), from which the subscription profile is to be downloaded, is given by the event record received by the subscriber module (200) from the SM-DS entity (400), information from the event record extending the DID with new data for use in the profile download and installation, wherein the information comprises an SM-DP+ address, an SM-DP+ OID, a matching identifier linking to the subscription profile prepared for download at the SM-DP+ entity (600), an indicator of automatic enabling of the subscription profile, an Integrated Circuit Card Identification Number, ICCID, of the subscription profile, and information on a mobile network operator or a communication service provider (700), wherein the event record is signed by the SM-DS entity (400), and wherein the method further comprises:
verifying (S108) the signed event record; and
storing (S110), upon successful verification of the signed event record, the information from the event record as part of the internal state in the subscriber module (200), wherein the information is either stored as a new DID or extends an already stored DID.

3. The method according to claim 1, wherein the subscriber module (200) verifies, in conjunction with downloading the subscription profile, that information received from the SM-DS entity (400) and information received by a communication device (500) in which the subscriber module (200) resides and to be provided to the SM-DS entity (400) matches the DID.

4. The method according to claim 3, wherein the subscriber module (200) verifies that information received from the SM-DS entity (400) matches the DID during authentication of the SM-DS entity (400).

5. The method according to any preceding claim, wherein the method further comprises:
enabling (S118) the subscription profile in the subscriber module (200) upon having installed the subscription profile.

6. The method according to any preceding claim, wherein the DID identifies the OID by the OID being part of the DID.

7. The method according to claim 6, wherein the DID is signed by a private key of the managing entity (300) or a manufacturer of the subscriber module (200), wherein the subscriber module (200) has access to a public key of the managing entity (300) or the manufacturer, wherein the DID is pre-stored in a communication device (500) in which the subscriber module (200) resides and provided to the subscriber module (200), and wherein the DID is validated by the subscriber module (200) verifying the signed DID by using the public key of the managing entity (300) or the manufacturer.

8. A method for enabling subscription profile download and installation to a subscriber module (200), the method being performed by a managing entity (300), the method comprising:
obtaining (S202) a trigger for the subscription profile to be downloaded to the subscriber module (200);
providing (S204), towards the subscriber module (200), download and installation data, DID, for the subscription profile, wherein the DID identifies
an object identifier, OID, of a Subscription Manager Data Preparation, SM-DP+, entity (600) for the subscriber module (200) to use when downloading and installing the subscription profile, and an address of the SM-DP+ entity (600), and/or
an address of a Subscription Management Discovery Server, SM-DS, entity (400), and an object identifier, OID, of the SM-DS entity (400) for the subscriber module (200) to use when downloading and installing the subscription profile;
receiving (S206), from the subscriber module (200), information that the subscription profile has been downloaded to and installed in the subscriber module (200), wherein the information comprises an Integrated Circuit Card Identification Number, ICCID, of the subscription profile.

9. A method for enabling subscription profile download and installation to a subscriber module (200), the method being performed by a Subscription Management Discovery Server, SM-DS, entity (400), the method comprising:
performing (S302) mutual authentication with the subscriber module (200); and
sending (S304), towards the subscriber module (200), an event record, wherein the event record is signed by the SM-DS entity (400) and comprises an object identifier, OID, of a Subscription Manager Data Preparation, SM-DP+, entity (600) for the subscriber module (200) to use when downloading and installing the subscription profile, and an address of the SM-DP+ entity (600).

10. The method according to claim 9, wherein performing the mutual authentication with the subscriber module (200) comprises the SM-DS entity (400) to use a private key of the SM-DS entity (400), and wherein the event record is signed by the private key.

11. A subscriber module (200) for subscription profile download and installation, the subscriber module (200) comprising processing circuitry (210), the processing circuitry being configured to cause the subscriber module (200) to:
obtain download and installation data, DID, for the subscription profile, wherein the DID identifies
an object identifier, OID, of a Subscription Manager Data Preparation, SM-DP+, entity (600) for the subscriber module (200) to use when downloading and installing the subscription profile, and an address of the SM-DP+ entity (600), and/or
an address of a Subscription Management Discovery Server, SM-DS, entity (400), and an object identifier, OID, of the SM-DS entity (400) for the subscriber module (200) to use when downloading and installing the subscription profile;
validate the DID to ensure the DID is acceptable by the subscriber module (200) for use in the subscription profile download and installation;
download the subscription profile from an SM-DP+ entity (600), wherein the SM-DP+ entity (600) from which the subscription profile is to be downloaded from is either given by the OID identified by the DID when the OID is of the SM-DP+ entity (600), or is given by an event record received by the subscriber module (200) from the SM-DS entity (400) when the OID identified by the DID is of the SM-DS entity (400) and wherein the SM-DS entity (400) is given by the OID identified by the DID; and
install the subscription profile in the subscriber module (200).

12. A managing entity (300) for enabling subscription profile download and installation to a subscriber module (200), the managing entity (300) comprising processing circuitry (310), the processing circuitry being configured to cause the managing entity (300) to:
obtain a trigger for the subscription profile to be downloaded to the subscriber module (200);
provide, towards the subscriber module (200), download and installation data, DID, for the subscription profile, wherein the DID identifies
an object identifier, OID, of a Subscription Manager Data Preparation, SM-DP+, entity (600) for the subscriber module (200) to use when downloading and installing the subscription profile, and an address of the SM-DP+ entity (600), and/or
an address of a Subscription Management Discovery Server, SM-DS, entity (400), and an object identifier, OID, of the SM-DS entity for the subscriber module to use when downloading and installing the subscription profile;
receive, from the subscriber module (200), information that the subscription profile has been downloaded to the subscriber module (200), wherein the information comprises an Integrated Circuit Card Identification Number, ICCID, of the subscription profile.

13. A Subscription Management Discovery Server, SM-DS, entity (400) for enabling subscription profile download and installation to a subscriber module (200), the SM-DS entity (400) comprising processing circuitry (410), the processing circuitry being configured to cause the SM-DS entity (400) to:
perform mutual authentication with the subscriber module (200); and
send, towards the subscriber module (200), an event record, wherein the event record is signed by the SM-DS entity (400) and comprises an object identifier, OID, of a Subscription Manager Data Preparation, SM-DP+, entity (600) for the subscriber module (200) to use when downloading and installing the subscription profile, and an address of the SM-DP+ entity.

14. A computer program (1220a) for subscription profile download and installation, the computer program comprising computer code which, when run on processing circuitry (210) of a subscriber module (200), causes the subscriber module (200) to:
obtain (S102) download and installation data, DID, for the subscription profile, wherein the DID identifies
an object identifier, OID, of a Subscription Manager Data Preparation, SM-DP+, entity (600) for the subscriber module (200) to use when downloading and installing the subscription profile, and an address of the SM-DP+ entity (600), and/or
an address of a Subscription Management Discovery Server, SM-DS, entity (400), and an object identifier, OID, of the SM-DS entity (400) for the subscriber module (200) to use when downloading and installing the subscription profile;
validate (S104) the DID to ensure the DID is acceptable by the subscriber module (200) for use in the subscription profile download and installation;
download (S112) the subscription profile from an SM-DP+ entity (600), wherein the SM-DP+ entity (600) from which the subscription profile is to be downloaded from is either given by the OID identified by the DID when the OID is of the SM-DP+ entity (600), or is given by an event record received by the subscriber module (200) from the SM-DS entity (400) when the OID identified by the DID is of the SM-DS entity (400) and wherein the SM-DS entity (400) is given by the OID identified by the DID; and
install (S116) the subscription profile in the subscriber module (200).

15. A computer program (1220b) for enabling subscription profile download and installation to a subscriber module (200), the computer program comprising computer code which, when run on processing circuitry (310) of a managing entity (300), causes the managing entity (300) to:
obtain (S202) a trigger for the subscription profile to be downloaded to the subscriber module (200);
provide (S204), towards the subscriber module (200), download and installation data, DID, for the subscription profile, wherein the DID identifies
an object identifier, OID, of a Subscription Manager Data Preparation, SM-DP+, entity (600) for the subscriber module (200) to use when downloading and installing the subscription profile, and an address of the SM-DP+ entity (600), and/or
an address of a Subscription Management Discovery Server, SM-DS, entity (400), and an object identifier, OID, of the SM DS entity (400) for the subscriber module (200) to use when downloading and installing the subscription profile;
receive (S206), from the subscriber module (200), information that the subscription profile has been downloaded to the subscriber module (200), wherein the information comprises an Integrated Circuit Card Identification Number, ICCID, of the subscription profile.

16. A computer program (1220c) for enabling subscription profile download and installation to a subscriber module (200), the computer program comprising computer code which, when run on processing circuitry (410) of a Subscription Management Discovery Server, SM-DS, entity (400), causes the SM-DS entity (400) to:
perform (S302) mutual authentication with the subscriber module (200); and
send (S304), towards the subscriber module (200), an event record, wherein the event record is signed by the SM-DS entity (400) and comprises an object identifier, OID, of a Subscription Manager Data Preparation, SM-DP+, entity (600) for the subscriber module (200) to use when downloading and installing the subscription profile, and an address of the SM-DP+ entity (600).

## Patentansprüche

1. Verfahren zum Herunterladen und Installieren eines Abonnementprofils, wobei das Verfahren von einem Teilnehmermodul (200) durchgeführt wird, wobei das Verfahren Folgendes umfasst:
Erhalten (S102) von Download- und Installationsdaten, DID, für das Abonnementprofil, wobei die DID Folgendes identifizieren:
eine Objektkennung, OID, einer Subscription Manager Data Preparation-Entität, SM-DP+-Entität, (600) zur Verwendung durch das Teilnehmermodul (200) beim Herunterladen und Installieren des Abonnementprofils und eine Adresse der SM-DP+-Entität (600) und/oder
eine Adresse einer Subscription Management Discovery Server-Entität, SM-DS-Entität, (400) und eine Objektkennung, OID, der SM-DS-Entität (400) zur Verwendung durch das Teilnehmermodul (200) beim Herunterladen und Installieren des Abonnementprofils;
Validieren (S104) der DID, um zu gewährleisten, dass die DID von dem Teilnehmermodul (200) zur Verwendung beim Herunterladen und Installieren des Abonnementprofils akzeptiert werden können;
Herunterladen (S112) des Abonnementprofils von einer SM-DP+-Entität (600), wobei die SM-DP+-Entität (600), von der das Abonnementprofil heruntergeladen werden soll, entweder durch die OID angegeben wird, die durch die DID identifiziert wird, wenn die OID von der SM-DP+-Entität (600) ist, oder durch einen Ereignisdatensatz angegeben wird, der durch das Teilnehmermodul (200) von der SM-DS-Entität (400) empfangen wird, wenn die durch die DID identifizierte OID von der SM-DS-Entität (400) ist, und wobei die SM-DS-Entität (400) durch die OID angegeben wird, die durch die DID identifiziert wird; und
Installieren (S116) des Abonnementprofils in dem Teilnehmermodul (200).

2. Verfahren nach Anspruch 1, wobei, wenn die SM-DP+-Entität (600), von der das Abonnementprofil heruntergeladen werden soll, durch den Ereignisdatensatz angegeben wird, der durch das Teilnehmermodul (200) von der SM-DS-Entität (400) empfangen wird, Informationen aus dem Ereignisdatensatz die DID um neue Daten zur Verwendung beim Herunterladen und Installieren des Profils erweitern, wobei die Informationen eine SM-DP+-Adresse, eine SM-DP+-OID, eine Matching-Kennung zur Verknüpfung mit dem an der SM-DP+-Entität (600) zum Herunterladen vorbereiteten Abonnementprofil, einen Indikator zur automatischen Aktivierung des Abonnementprofils, eine Integrated Circuit Card Identification-Nummer, ICCID-Nummer, des Abonnementprofils und Informationen über einen Mobilfunknetzwerkbetreiber oder einen Kommunikationsdienstanbieter (700) umfassen, wobei der Ereignisdatensatz von der SM-DS-Entität (400) signiert ist, und wobei das Verfahren ferner Folgendes umfasst:
Überprüfen (S108) des signierten Ereignisdatensatzes; und
Speichern (S110) der Informationen aus dem Ereignisdatensatz nach erfolgreicher Überprüfung des signierten Ereignisdatensatzes als Teil des internen Zustands im Teilnehmermodul (200), wobei die Informationen entweder als neue DID gespeichert werden oder bereits gespeicherte DID erweitern.

3. Verfahren nach Anspruch 1, wobei das Teilnehmermodul (200) in Verbindung mit dem Herunterladen des Abonnementprofils überprüft, ob Informationen, die von der SM-DS-Entität (400) empfangen werden, und Informationen, die durch eine Kommunikationsvorrichtung (500) empfangen werden, in der sich das Teilnehmermodul (200) befindet, und die der SM-DS-Entität (400) bereitgestellt werden sollen, mit den DID übereinstimmen.

4. Verfahren nach Anspruch 3, wobei das Teilnehmermodul (200) während der Authentifizierung der SM-DS-Entität (400) überprüft, ob Informationen, die von der SM-DS-Entität (400) empfangen werden, mit den DID übereinstimmen.

5. Verfahren nach einem der vorstehenden Ansprüche, wobei das Verfahren ferner Folgendes umfasst:
Aktivieren (S118) des Abonnementprofils in dem Teilnehmermodul (200) nach dem Installieren des Abonnementprofils.

6. Verfahren nach einem der vorhergehenden Ansprüche, wobei die DID die OID dadurch identifizieren, dass die OID Teil der DID ist.

7. Verfahren nach Anspruch 6, wobei die DID mit einem privaten Schlüssel der Verwaltungsentität (300) oder eines Herstellers des Teilnehmermoduls (200) signiert werden, wobei das Teilnehmermodul (200) Zugriff auf einen öffentlichen Schlüssel der Verwaltungsentität (300) oder des Herstellers hat, wobei die DID in einer Kommunikationsvorrichtung (500), in der sich das Teilnehmermodul (200) befindet, vorab gespeichert und dem Teilnehmermodul (200) bereitgestellt werden, und wobei die DID von dem Teilnehmermodul (200) validiert werden, indem die signierten DID durch Verwenden des öffentlichen Schlüssels der Verwaltungsentität (300) oder des Herstellers überprüft werden.

8. Verfahren zum Ermöglichen des Herunterladens und Installierens eines Abonnementprofils auf einem Teilnehmermodul (200), wobei das Verfahren von einer Verwaltungsentität (300) durchgeführt wird, wobei das Verfahren Folgendes umfasst:
Erhalten (S202) eines Auslösers, damit das Abonnementprofil auf das Teilnehmermodul (200) heruntergeladen wird;
Bereitstellen (S204) von Download- und Installationsdaten, DID, für das Abonnementprofil an das Teilnehmermodul (200), wobei die DID Folgendes identifizieren:
eine Objektkennung, OID, einer Subscription Manager Data Preparation-Entität, SM-DP+-Entität, (600) zur Verwendung durch das Teilnehmermodul (200) beim Herunterladen und Installieren des Abonnementprofils und eine Adresse der SM-DP+-Entität (600) und/oder
eine Adresse einer Subscription Management Discovery Server-Entität, SM-DS-Entität, (400) und eine Objektkennung, OID, der SM-DS-Entität (400) zur Verwendung durch das Teilnehmermodul (200) beim Herunterladen und Installieren des Abonnementprofils;
Empfangen (S206) von Informationen von dem Teilnehmermodul (200), dass das Abonnementprofil heruntergeladen und im Teilnehmermodul (200) installiert wurde, wobei die Informationen eine Integrated Circuit Card Identification-Nummer, ICCID-Nummer, des Abonnementprofils umfassen.

9. Verfahren zum Ermöglichen des Herunterladens und Installierens eines Abonnementprofils auf einem Teilnehmermodul (200), wobei das Verfahren von einer Subscription Management Discovery Server-Entität, SM-DS-Entität, (400) durchgeführt wird, wobei das Verfahren Folgendes umfasst:
Durchführen (S302) von gegenseitiger Authentifizierung mit dem Teilnehmermodul (200); und
Senden (S304) eines Ereignisdatensatzes an das Teilnehmermodul (200), wobei der Ereignisdatensatz von der SM-DS-Entität (400) signiert ist und eine Objektkennung, OID, einer Subscription Manager Data Preparation-Entität, SM-DP+-Entität, (600) zur Verwendung durch das Teilnehmermodul (200) beim Herunterladen und Installieren des Abonnementprofils und eine Adresse der SM-DP+-Entität (600) umfasst.

10. Verfahren nach Anspruch 9, wobei das Durchführen der gegenseitigen Authentifizierung mit dem Teilnehmermodul (200) umfasst, dass die SM-DS-Entität (400) einen privaten Schlüssel der SM-DS-Entität (400) verwendet, und wobei der Ereignisdatensatz durch den privaten Schlüssel signiert ist.

11. Teilnehmermodul (200) zum Herunterladen und Installieren eines Abonnementprofils, wobei das Teilnehmermodul (200) Verarbeitungsschaltungsanordnung (210) umfasst und die Verarbeitungsschaltungsanordnung dazu konfiguriert ist, das Teilnehmermodul (200) zu Folgendem zu veranlassen:
Erhalten von Download- und Installationsdaten, DID, für das Abonnementprofil, wobei die DID Folgendes identifizieren:
eine Objektkennung, OID, einer Subscription Manager Data Preparation-Entität, SM-DP+-Entität, (600) zur Verwendung durch das Teilnehmermodul (200) beim Herunterladen und Installieren des Abonnementprofils und eine Adresse der SM-DP+-Entität (600) und/oder
eine Entität einer Subscription Management Discovery Server-Entität, SM-DS-Entität, (400) und eine Objektkennung, OID, der SM-DS-Entität (400) zur Verwendung durch das Teilnehmermodul (200) beim Herunterladen und Installieren des Abonnementprofils;
Validieren der DID, um zu gewährleisten, dass die DID von dem Teilnehmermodul (200) zur Verwendung beim Herunterladen und Installieren des Abonnementprofils akzeptiert werden können;
Herunterladen des Abonnementprofils von einer SM-DP+-Entität (600), wobei die SM-DP+-Entität (600), von der das Abonnementprofil heruntergeladen werden soll, entweder durch die OID angegeben wird, die durch die DID identifiziert wird, wenn die OID von der SM-DP+-Entität (600) ist, oder durch einen Ereignisdatensatz angegeben wird, der durch das Teilnehmermodul (200) von der SM-DS-Entität (400) empfangen wird, wenn die durch die DID identifizierte OID von der SM-DS-Entität (400) ist, und wobei die SM-DS-Entität (400) durch die OID angegeben wird, die durch die DID identifiziert wird; und
Installieren des Abonnementprofils in dem Teilnehmermodul (200).

12. Verwaltungsentität (300) zum Ermöglichen des Herunterladens und Installierens eines Abonnementprofils auf einem Teilnehmermodul (200), wobei die Verwaltungsentität (300) Verarbeitungsschaltungsanordnung (310) umfasst und die Verarbeitungsschaltungsanordnung dazu konfiguriert ist, die Verwaltungsentität (300) zu Folgendem zu veranlassen:
Erhalten eines Auslösers, damit das Abonnementprofil auf das Teilnehmermodul (200) heruntergeladen wird;
Bereitstellen von Download- und Installationsdaten, DID, für das Abonnementprofil an das Teilnehmermodul (200), wobei die DID Folgendes identifiziert:
eine Objektkennung, OID, einer Subscription Manager Data Preparation-Entität, SM-DP+-Entität, (600) zur Verwendung durch das Teilnehmermodul (200) beim Herunterladen und Installieren des Abonnementprofils und eine Adresse der SM-DP+-Entität (600) und/oder
eine Adresse einer Subscription Management Discovery Server-Entität, SM-DS-Entität, (400) und eine Objektkennung, OID, der SM-DS-Entität zur Verwendung durch das Teilnehmermodul beim Herunterladen und Installieren des Abonnementprofils;
Empfangen von Informationen von dem Teilnehmermodul (200), dass das Abonnementprofil auf das Teilnehmermodul (200) heruntergeladen wurde, wobei die Informationen eine Integrated Circuit Card Identification-Nummer, ICCID-Nummer, des Abonnementprofils umfassen.

13. Subscription Management Discovery Server-Entität, SM-DS-Entität, (400) zum Ermöglichen des Herunterladens und Installierens eines Abonnementprofils auf einem Teilnehmermodul (200), wobei die SM-DS-Entität (400) Verarbeitungsschaltungsanordnung (410) umfasst und die Verarbeitungsschaltungsanordnung dazu konfiguriert ist, die SM-DS-Entität (400) zu Folgendem zu veranlassen:
Durchführen von gegenseitiger Authentifizierung mit dem Teilnehmermodul (200); und
Senden eines Ereignisdatensatzes an das Teilnehmermodul (200), wobei der Ereignisdatensatz von der SM-DS-Entität (400) signiert ist und eine Objektkennung, OID, einer Subscription Manager Data Preparation-Entität, SM-DP+-Entität, (600) zur Verwendung durch das Teilnehmermodul (200) beim Herunterladen und Installieren des Abonnementprofils und eine Adresse der SM-DP+-Entität umfasst.

14. Computerprogramm (1220a) zum Herunterladen und Installieren eines Abonnementprofils, wobei das Computerprogramm Computercode umfasst, der bei Ausführung auf Verarbeitungsschaltungsanordnung (210) eines Teilnehmermoduls (200) das Teilnehmermodul (200) zu Folgendem veranlasst:
Erhalten (S102) von Download- und Installationsdaten, DID, für das Abonnementprofil, wobei die DID Folgendes identifizieren:
eine Objektkennung, OID, einer Subscription Manager Data Preparation-Entität, SM-DP+-Entität, (600) zur Verwendung durch das Teilnehmermodul (200) beim Herunterladen und Installieren des Abonnementprofils und eine Adresse der SM-DP+-Entität (600) und/oder
eine Adresse einer Subscription Management Discovery Server-Entität, SM-DS-Entität, (400) und eine Objektkennung, OID, der SM-DS-Entität (400) zur Verwendung durch das Teilnehmermodul (200) beim Herunterladen und Installieren des Abonnementprofils identifizieren;
Validieren (S104) der DID, um zu gewährleisten, dass die DID von dem Teilnehmermodul (200) zur Verwendung beim Herunterladen und Installieren des Abonnementprofils akzeptiert werden können;
Herunterladen (S112) des Abonnementprofils von einer SM-DP+-Entität (600), wobei die SM-DP+-Entität (600), von der das Abonnementprofil heruntergeladen werden soll, entweder durch die OID angegeben wird, die durch die DID identifiziert wird, wenn die OID von der SM-DP+-Entität (600) ist, oder durch einen Ereignisdatensatz angegeben wird, der durch das Teilnehmermodul (200) von der SM-DS-Entität (400) empfangen wird, wenn die durch die DID identifizierte OID von der SM-DS-Entität (400) ist, und wobei die SM-DS-Entität (400) durch die OID angegeben wird, die durch die DID identifiziert wird; und
Installieren (S116) des Abonnementprofils in dem Teilnehmermodul (200).

15. Computerprogramm (1220b) zum Ermöglichen des Herunterladens und Installierens eines Abonnementprofils auf einem Teilnehmermodul (200), wobei das Computerprogramm Computercode umfasst, der bei Ausführung auf Verarbeitungsschaltungsanordnung (310) einer Verwaltungsentität (300) die Verwaltungsentität (300) zu Folgendem veranlasst:
Erhalten (S202) eines Auslösers, damit das Abonnementprofil auf das Teilnehmermodul (200) heruntergeladen wird;
Bereitstellen (S204) von Download- und Installationsdaten, DID, für das Abonnementprofil an das Teilnehmermodul (200), wobei die DID Folgendes identifizieren:
eine Objektkennung, OID, einer Subscription Manager Data Preparation-Entität, SM-DP+-Entität, (600) zur Verwendung durch das Teilnehmermodul (200) beim Herunterladen und Installieren des Abonnementprofils und eine Adresse der SM-DP+-Entität (600) und/oder
eine Adresse einer Subscription Management Discovery Server-Entität, SM-DS-Entität, (400) und eine Objektkennung, OID, der SM-DS-Entität (400) zur Verwendung durch das Teilnehmermodul (200) beim Herunterladen und Installieren des Abonnementprofils;
Empfangen (S206) von Informationen von dem Teilnehmermodul (200), dass das Abonnementprofil auf das Teilnehmermodul (200) heruntergeladen wurde, wobei die Informationen eine Integrated Circuit Card Identification-Nummer, ICCID-Nummer, des Abonnementprofils umfassen.

16. Computerprogramm (1220c) zum Ermöglichen des Herunterladens und Installierens eines Abonnementprofils auf einem Teilnehmermodul (200), wobei das Computerprogramm Computercode umfasst, der bei Ausführung auf Verarbeitungsschaltungsanordnung (410) einer Subscription Management Discovery Server-Entität, SM-DS-Entität, (400) die SM-DS-Entität (400) zu Folgendem veranlasst:
Durchführen (S302) von gegenseitiger Authentifizierung mit dem Teilnehmermodul (200); und
Senden (S304) eines Ereignisdatensatzes an das Teilnehmermodul (200), wobei der Ereignisdatensatz von der SM-DS-Entität (400) signiert ist und eine Objektkennung, OID, einer Subscription Manager Data Preparation-Entität, SM-DP+-Entität, (600) zur Verwendung durch das Teilnehmermodul (200) beim Herunterladen und Installieren des Abonnementprofils und eine Adresse der SM-DP+-Entität (600) umfasst.

## Revendications

1. Procédé de téléchargement et d'installation de profil d'abonnement, le procédé étant réalisé par un module d'abonné (200), le procédé comprenant :
l'obtention (S102) de données de téléchargement et d'installation, DID, pour le profil d'abonnement, dans lequel les DID identifient
un identifiant d'objet, OID, d'une entité de préparation de données de gestionnaire d'abonnement, SM-DP+, (600) à utiliser par le module d'abonné (200) lors du téléchargement et de l'installation du profil d'abonnement, et une adresse de l'entité SM-DP+ (600) et/ou
une adresse d'une entité de serveur de découverte de gestion d'abonnement, SM-DS, (400) et un identifiant d'objet, OID, de l'entité SM-DS (400) à utiliser par le module d'abonné (200) lors du téléchargement et de l'installation du profil d'abonnement ;
la validation (S104) des DID pour s'assurer que les DID sont acceptables par le module d'abonné (200) pour leur utilisation dans le téléchargement et l'installation de profil d'abonnement ;
le téléchargement (S112) du profil d'abonnement à partir d'une entité SM-DP+ (600), dans lequel l'entité SM-DP+ (600) de laquelle le profil d'abonnement doit être téléchargé est donnée par l'OID identifié par les DID lorsque l'OID est de l'entité SM-DP+ (600) ou est donnée par un enregistrement d'événement reçu par le module d'abonné (200) depuis l'entité SM-DS (400) lorsque l'OID identifié par les DID est de l'entité SM-DS (400) et dans lequel l'entité SM-DS (400) est donnée par l'OID identifié par les DID ; et
l'installation (S116) du profil d'abonnement dans le module d'abonné (200).

2. Procédé selon la revendication 1, dans lequel, lorsque l'entité SM-DP+ (600), de laquelle le profil d'abonnement doit être téléchargé, est donnée par l'enregistrement d'événement reçu par le module d'abonné (200) depuis l'entité SM-DS (400), des informations de l'enregistrement d'événement étendent les DID avec de nouvelles données à utiliser dans le téléchargement et l'installation de profil, dans lequel les informations comprennent une adresse SM-DP+, un OID SM-DP+, un identifiant de correspondance reliant au profil d'abonnement préparé pour un téléchargement au niveau de l'entité SM-DP+ (600), un indicateur d'activation automatique du profil d'abonnement, un numéro d'identification de carte de circuit intégré, ICCID, du profil d'abonnement, et des informations sur un opérateur de réseau mobile ou un fournisseur de service de communication (700), dans lequel l'enregistrement d'événement est signé par l'entité SM-DS (400), et dans lequel le procédé comprend en outre :
la vérification (S108) de l'enregistrement d'événement signé ; et
le stockage (S110), lors d'une vérification réussie de l'enregistrement d'événement signé, des informations de l'enregistrement d'événement dans le cadre de l'état interne dans le module d'abonné (200), dans lequel les informations sont stockées en tant que nouvelles DID ou étendent des DID déjà stockées.

3. Procédé selon la revendication 1, dans lequel le module d'abonné (200) vérifie, en relation avec le téléchargement du profil d'abonnement, que des informations reçues depuis l'entité SM-DS (400) et des informations reçues par un dispositif de communication (500) dans lequel réside le module d'abonné (200) et à fournir à l'entité SM-DS (400) correspondent aux DID.

4. Procédé selon la revendication 3, dans lequel le module d'abonné (200) vérifie que des informations reçues depuis l'entité SM-DS (400) correspondent aux DID pendant une authentification de l'entité SM-DS (400).

5. Procédé selon l'une quelconque des revendications précédentes, dans lequel le procédé comprend en outre :
l'activation (S118) du profil d'abonnement dans le module d'abonné (200) lors de l'installation du profil d'abonnement.

6. Procédé selon l'une quelconque des revendications précédentes, dans lequel les DID identifient l'OID par le fait que l'OID fait partie des DID.

7. Procédé selon la revendication 6, dans lequel les DID sont signées par une clé privée de l'entité de gestion (300) ou d'un fabricant du module d'abonné (200), dans lequel le module d'abonné (200) a accès à une clé publique de l'entité de gestion (300) ou du fabricant, dans lequel les DID sont préalablement stockées dans un dispositif de communication (500) dans lequel réside le module d'abonné (200) et sont fournies au module d'abonné (200), et dans lequel les DID sont validées par le module d'abonné (200) en vérifiant les DID signées à l'aide de la clé publique de l'entité de gestion (300) ou du fabricant.

8. Procédé d'activation de téléchargement et d'installation de profil d'abonnement sur un module d'abonné (200), le procédé étant réalisé par une entité de gestion (300), le procédé comprenant :
l'obtention (S202) d'un déclenchement pour le profil d'abonnement à télécharger sur le module d'abonné (200) ;
la fourniture (S204), au module d'abonné (200), de données de téléchargement et d'installation, DID, pour le profil d'abonnement, dans lequel les DID identifient
un identifiant d'objet, OID, d'une entité de préparation de données de gestionnaire d'abonnement, SM-DP+, (600) à utiliser par le module d'abonné (200) lors du téléchargement et de l'installation du profil d'abonnement, et une adresse de l'entité SM-DP+ (600) et/ou
une adresse d'une entité de serveur de découverte de gestion d'abonnement, SM-DS, (400) et un identifiant d'objet, OID, de l'entité SM-DS (400) à utiliser par le module d'abonné (200) lors du téléchargement et de l'installation du profil d'abonnement ;
la réception (S206), depuis le module d'abonné (200), d'informations que le profil d'abonnement a été téléchargé et installé sur le module d'abonné (200), dans lequel les informations comprennent un numéro d'identification de carte de circuit intégré, ICCID, du profil d'abonnement.

9. Procédé d'activation de téléchargement et d'installation de profil d'abonnement sur un module d'abonné (200), le procédé étant réalisé par une entité de serveur de découverte de gestion d'abonnement, SM-DS, (400), le procédé comprenant :
la réalisation (S302) d'une authentification réciproque avec le module d'abonné (200) ; et
l'envoi (S304), au module d'abonné (200), d'un enregistrement d'événement, dans lequel l'enregistrement d'événement est signé par l'entité SM-DS (400) et comprend un identifiant d'objet, OID, d'une entité de préparation de données de gestionnaire d'abonnement, SM-DP+, (600) à utiliser par le module d'abonné (200) lors du téléchargement et de l'installation du profil d'abonnement, et une adresse de l'entité SM-DP+ (600).

10. Procédé selon la revendication 9, dans lequel la réalisation de l'authentification réciproque avec le module d'abonné (200) comprend l'utilisation, par l'entité SM-DS (400), d'une clé privée de l'entité SM-DS (400), et dans lequel l'enregistrement d'événement est signé par la clé privée.

11. Module d'abonné (200) pour le téléchargement et l'installation de profil d'abonnement, le module d'abonné (200) comprenant une circuiterie de traitement (210), la circuiterie de traitement étant configurée pour amener le module d'abonné (200) à :
obtenir des données de téléchargement et d'installation, DID, pour le profil d'abonnement, dans lequel les DID identifient
un identifiant d'objet, OID, d'une entité de préparation de données de gestionnaire d'abonnement, SM-DP+, (600) à utiliser par le module d'abonné (200) lors du téléchargement et de l'installation du profil d'abonnement, et une adresse de l'entité SM-DP+ (600) et/ou
une adresse d'une entité de serveur de découverte de gestion d'abonnement, SM-DS, (400) et un identifiant d'objet, OID, de l'entité SM-DS (400) à utiliser par le module d'abonné (200) lors du téléchargement et de l'installation du profil d'abonnement ;
valider les DID pour s'assurer que les DID sont acceptables par le module d'abonné (200) pour leur utilisation dans le téléchargement et l'installation de profil d'abonnement ;
télécharger le profil d'abonnement à partir d'une entité SM-DP+ (600), dans lequel l'entité SM-DP+ (600) de laquelle le profil d'abonnement doit être téléchargé est donnée par l'OID identifié par les DID lorsque l'OID est de l'entité SM-DP+ (600) ou est donnée par un enregistrement d'événement reçu par le module d'abonné (200) depuis l'entité SM-DS (400) lorsque l'OID identifié par les DID est de l'entité SM-DS (400) et dans lequel l'entité SM-DS (400) est donnée par l'OID identifié par les DID ; et
installer le profil d'abonnement dans le module d'abonné (200).

12. Entité de gestion (300) pour l'activation de téléchargement et d'installation de profil d'abonnement sur un module d'abonné (200), l'entité de gestion (300) comprenant une circuiterie de traitement (310), la circuiterie de traitement étant configurée pour amener l'entité de gestion (300) à :
obtenir un déclenchement pour le profil d'abonnement à télécharger sur le module d'abonné (200) ;
fournir, au module d'abonné (200), des données de téléchargement et d'installation, DID, pour le profil d'abonnement, dans laquelle les DID identifient
un identifiant d'objet, OID, d'une entité de préparation de données de gestionnaire d'abonnement, SM-DP+, (600) à utiliser par le module d'abonné (200) lors du téléchargement et de l'installation du profil d'abonnement, et une adresse de l'entité SM-DP+ (600) et/ou
une adresse d'une entité de serveur de découverte de gestion d'abonnement, SM-DS, (400) et un identifiant d'objet, OID, de l'entité SM-DS à utiliser par le module d'abonné lors du téléchargement et de l'installation du profil d'abonnement ;
recevoir, depuis le module d'abonné (200), des informations que le profil d'abonnement a été téléchargé sur le module d'abonné (200), dans laquelle les informations comprennent un numéro d'identification de carte de circuit intégré, ICCID, du profil d'abonnement.

13. Entité de serveur de découverte de gestion d'abonnement, SM-DS, (400) pour l'activation de téléchargement et d'installation de profil d'abonnement sur un module d'abonné (200), l'entité SM-DS (400) comprenant une circuiterie de traitement (410), la circuiterie de traitement étant configurée pour amener l'entité SM-DS (400) à :
réaliser une authentification réciproque avec le module d'abonné (200) ; et
envoyer, au module d'abonné (200), un enregistrement d'événement, dans laquelle l'enregistrement d'événement est signé par l'entité SM-DS (400) et comprend un identifiant d'objet, OID, d'une entité de préparation de données de gestionnaire d'abonnement, SM-DP+, (600) à utiliser par le module d'abonné (200) lors du téléchargement et de l'installation du profil d'abonnement, et une adresse de l'entité SM-DP+.

14. Programme informatique (1220a) pour le téléchargement et l'installation de profil d'abonnement, le programme informatique comprenant un code informatique qui, lorsqu'il est exécuté sur une circuiterie de traitement (210) d'un module d'abonné (200), amène le module d'abonné (200) à :
obtenir (S102) des données de téléchargement et d'installation, DID, pour le profil d'abonnement, dans lequel les DID identifient
un identifiant d'objet, OID, d'une entité de préparation de données de gestionnaire d'abonnement, SM-DP+, (600) à utiliser par le module d'abonné (200) lors du téléchargement et de l'installation du profil d'abonnement, et une adresse de l'entité SM-DP+ (600) et/ou
une adresse d'une entité de serveur de découverte de gestion d'abonnement, SM-DS, (400) et un identifiant d'objet, OID, de l'entité SM-DS (400) à utiliser par le module d'abonné (200) lors du téléchargement et de l'installation du profil d'abonnement ;
valider (S104) les DID pour s'assurer que les DID sont acceptables par le module d'abonné (200) pour leur utilisation dans le téléchargement et l'installation de profil d'abonnement ;
télécharger (S112) le profil d'abonnement à partir d'une entité SM-DP+ (600), dans lequel l'entité SM-DP+ (600) de laquelle le profil d'abonnement doit être téléchargé est donnée par l'OID identifié par les DID lorsque l'OID est de l'entité SM-DP+ (600) ou est donnée par un enregistrement d'événement reçu par le module d'abonné (200) depuis l'entité SM-DS (400) lorsque l'OID identifié par les DID est de l'entité SM-DS (400) et dans lequel l'entité SM-DS (400) est donnée par l'OID identifié par les DID ; et
installer (S116) le profil d'abonnement dans le module d'abonné (200).

15. Programme informatique (1220b) pour l'activation du téléchargement et de l'installation de profil d'abonnement sur un module d'abonné (200), le programme informatique comprenant un code informatique qui, lorsqu'il est exécuté sur une circuiterie de traitement (310) d'une entité de gestion (300), amène l'entité de gestion (300) à :
obtenir (S202) un déclenchement pour le profil d'abonnement à télécharger sur le module d'abonné (200) ;
fournir (S204), au module d'abonné (200), des données de téléchargement et d'installation, DID, pour le profil d'abonnement, dans lequel les DID identifient
un identifiant d'objet, OID, d'une entité de préparation de données de gestionnaire d'abonnement, SM-DP+, (600) à utiliser par le module d'abonné (200) lors du téléchargement et de l'installation du profil d'abonnement, et une adresse de l'entité SM-DP+ (600) et/ou
une adresse d'une entité de serveur de découverte de gestion d'abonnement, SM-DS, (400) et un identifiant d'objet, OID, de l'entité SM-DS (400) à utiliser par le module d'abonné (200) lors du téléchargement et de l'installation du profil d'abonnement ;
recevoir (S206), depuis le module d'abonné (200), des informations que le profil d'abonnement a été téléchargé sur le module d'abonné (200), dans lequel les informations comprennent un numéro d'identification de carte de circuit intégré, ICCID, du profil d'abonnement.

16. Programme informatique (1220c) pour l'activation du téléchargement et de l'installation de profil d'abonnement sur un module d'abonné (200), le programme informatique comprenant un code informatique qui, lorsqu'il est exécuté sur une circuiterie de traitement (410) d'une entité de serveur de découverte de gestion d'abonnement, SM-DS, (400), amène l'entité SM-DS (400) à :
réaliser (S302) une authentification réciproque avec le module d'abonné (200) ; et
envoyer (S304), au module d'abonné (200), un enregistrement d'événement, dans lequel l'enregistrement d'événement est signé par l'entité SM-DS (400) et comprend un identifiant d'objet, OID, d'une entité de préparation de données de gestionnaire d'abonnement, SM-DP+, (600) à utiliser par le module d'abonné (200) lors du téléchargement et de l'installation du profil d'abonnement, et une adresse de l'entité SM-DP+ (600).
